(19) Europäisches Patentamt / European Patent Office / Office européen des brevets

(11) **EP 3 094 091 B1**

(12) **EUROPEAN PATENT SPECIFICATION**

(45) Date of publication and mention
of the grant of the patent:
**21.05.2025 Bulletin 2025/21**

(21) Application number: **15752321.8**

(22) Date of filing: **02.02.2015**

(51) International Patent Classification (IPC):
$H04N\ 19/174^{(2014.01)}$    $H04N\ 19/129^{(2014.01)}$
$H04N\ 19/593^{(2014.01)}$    $H04N\ 19/146^{(2014.01)}$

(52) Cooperative Patent Classification (CPC):
**H04N 19/174; H04N 19/129; H04N 19/146;
H04N 19/593**

(86) International application number:
**PCT/CN2015/072089**

(87) International publication number:
**WO 2015/124058 (27.08.2015 Gazette 2015/34)**

(54) **CODING AND DECODING METHOD AND DEVICE**

CODIERUNGS- UND DECODIERUNGSVERFAHREN UND VORRICHTUNG

MÉTHODE ET DISPOSITIF DE CODAGE ET DE DÉCODAGE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **18.02.2014 CN 201410054130**

(43) Date of publication of application:
**16.11.2016 Bulletin 2016/46**

(73) Proprietor: **Huawei Technologies Co., Ltd.
Longgang District
Shenzhen, Guangdong 518129 (CN)**

(72) Inventors:
• **YANG, Haitao
Shenzhen
Guangdong 518129 (CN)**
• **ZHENG, Amin
Shenzhen, Guangdong 518129 (CN)**
• **YUAN, Yuan
Shenzhen, Guangdong 518129 (CN)**
• **AU, Oscar
Shenzhen, Guangdong 518129 (CN)**

(74) Representative: **Epping - Hermann - Fischer
Patentanwaltsgesellschaft mbH
Schloßschmidstraße 5
80639 München (DE)**

(56) References cited:
EP-A1- 2 211 552    CN-A- 101 350 927
CN-A- 101 965 734    CN-A- 102 045 560
CN-A- 102 651 816    US-A1- 2012 082 392
US-A1- 2013 051 475    US-A1- 2013 064 294

## Description

## TECHNICAL FIELD

The present invention relates to the field of image processing, and in particular, to encoding and decoding methods, an encoder, a decoder, and a computer program.

## BACKGROUND

Video compression coding technologies are widely used in the fields of multimedia services, broadcast communications, video communications, storage, and the like. The H.264 standard and the advanced video coding (Advanced Video Coding, AVC) standard that are jointly developed by the International Telecommunication Union-Telecommunication Standardization Sector (International Telecommunication Union-Telecommunication standardization sector, ITU-T) and the International Organization for Standardization (International Organization for Standardization, ISO)/International Electrotechnical Commission (International Electrotechnical Commission, IEC) are the most widely used video coding standards today. However, the H.264/AVC is not applicable to compression coding of a high resolution video. As people have increasing demands for high-definition, ultra high definition, and 3D videos, the Joint Collaborative Team on Video Coding (Joint Collaborative Team on Video Coding, JCT-VC) puts forward the High Efficiency Video Coding standard (High Efficiency Video Coding, HEVC), and compared with the H.264/AVC, compression efficiency of the HEVC is improved by approximately 50%.

In the HEVC standard, a to-be-encoded image is divided into non-overlapping image blocks. An encoder performs progressive scanning to sequentially process each image block. The foregoing image block may be further divided into multiple subblocks, and coding parameters of each subblock may be independently determined for each subblock. In HEVC terminologies, the foregoing non-overlapping image blocks are referred to as coding tree units (Coding Tree Unit, CTU), and a size of the coding tree unit is generally set to 64x64 pixels. A quadtree structure may be used to further divide the CTU into multiple subblocks, where the subblock is generally referred to as a code unit (Coding Unit, CU) in the HEVC. CUs in one CTU are encoded in an order of scanning in a Z-shaped manner, and all CTUs in one frame are encoded in an order of line scan. An intra-frame prediction mode in the HEVC includes direct current prediction, plane prediction, and directional prediction. For a to-be-encoded block, code blocks that are already reconstructed on the left of and above the to-be-encoded block are used as references for prediction, and a pixel used for prediction in the block that is already reconstructed is referred to as a reference pixel. The direct current prediction is applicable to a block in an area with flat textures in the image, and for all pixels in the block, an average value of the reference pixel is used as a predictor. In the plane prediction, the reference pixel is used to go through a bilinear interpolation operation to obtain predictors of all pixels in a block, and therefore, the plane prediction is applicable to a block with smoothly changing textures. In the directional prediction, a feature that textures included in a current code block are highly related to a block that is already reconstructed and close to the current code block is used, and along a given direction a value of a corresponding reference pixel is duplicated as a predictor of a pixel in the current block.

In the H.264/AVC standard, a code block is referred to as a macroblock (Macro Block, MB), a size of the macroblock is fixedly 16×16 pixels, and each macroblock can be divided into only 4×4, 8×8, or 16×16 sub macroblocks (Sub Macro Block, SMB) for predictive coding. The MB and the SMB respectively correspond to a CTU and a CU in the HEVC. An encoding order of MBs is similar to that of CTUs, and both the MBs and the CTUs are encoded in an order of line scan, and an encoding order of SMBs is also progressive scanning in a Z-shaped manner. Intra-frame prediction in the H.264/AVC also uses mean prediction and directional prediction, but there are a maximum of nine prediction modes.

That is, when an image is encoded in a traditional video coding standard, a to-be-encoded image is first divided into non-overlapping code blocks, and then each block is sequentially encoded in a fixed order (an order of line scan), which results in relatively low encoding compression efficiency.

Document US 2012/0082392 A1 relates to a method and apparatus for frame coding in adaptive raster scan order. The method includes encoding at least one of image or video utilizing input frames and at least one of a data related to the input frame to produce a bitstream with raster scan order information and displacement information for producing a compressed video bitstream. At decoding time, the method includes decoding at least one of the encoded bitstreams with raster scan order information and displacement information for producing a compressed video bitstream. Specifically, the proposed method and apparatus add a vertical raster scan order to the HEVC standard and adaptively select the best coding scan order between the horizontal and vertical raster scan order based on any criteria, such as size of horizontal/vertical motion, coding efficiency, on-chip memory saving etc.

Document EP 2 211 552 A1 discloses an improved method for video encoding comprising dividing a video image into a plurality of MB groups, determining a raster scan type within an MB group, encoding the MBs of the MB group according to the determined raster scan type, wherein intra prediction is used, and generating an encoded video stream. The encoded MB group is inserted as a data block into the video stream. The data block comprises the encoded macroblocks and the macroblock group header with an indication that indicates the determined raster scan type within the MB group. Specifically, an input frame is divided into several different groups of MBs. Each group is coded as one unit. The different groups are coded in a raster scan order. Different coding orders of MBs in one group are tested in order to find the best coding order with the lowest rate-distortion (R-D) cost of the group. The chosen coding order of the MB group is indicated in the bitstream to ensure correct decoding.

Document US 2013/0064294 A1 discloses techniques for coding coefficients of a video block having a non-square shape defined by widths and a height, comprising coding one or more of x and y coordinates that indicate a position of a last non-zero coefficient within the block according to an associated scanning order, including coding each coordinate by determining one or more contacts used to code the coordinate based on one of the widths and the height that corresponds to the coordinate, and coding the coordinate by performing a context adaptive entropy coding process based on the context.

Document US 2013/051475 A1 discloses adaptive scanning of subblocks within a TU based on neighboring block's information (prediction mode, motion information, scan index).

SUMMARY

Embodiments of the present invention provide encoding and decoding methods, an encoder, a decoder, and a computer program. The present invention is defined by the attached set of claims. Embodiments and aspects which are not covered by the invention should be considered as examples useful for understanding the invention.

In the embodiments of the present invention, a first processing order of multiple code blocks groups included in a target image is determined according to a total coding cost of the target image, and the multiple code blocks groups are encoded and decoded according to the first processing order, so that a spatial correlation in video information can be fully utilized, thereby improving compression efficiency during encoding and decoding.

BRIEF DESCRIPTION OF DRAWINGS

To describe the technical solutions in the embodiments of the present invention more clearly, the following briefly introduces the accompanying drawings required for describing the embodiments of the present invention. Apparently, the accompanying drawings in the following description show merely some embodiments of the present invention, and a person of ordinary skill in the art may still derive other drawings from these accompanying drawings without creative efforts.

FIG. 1 is a flowchart of an encoding method according to an embodiment of the present invention;
FIG. 2 is a flowchart of a decoding method according to an embodiment of the present invention;
FIG. 3 is a schematic diagram of a processing order of code blocks not covered by the claims but useful for understanding the present invention;
FIG. 4 is a schematic diagram of a processing order of code blocks according to another embodiment of the present invention;
FIG. 5 is a schematic diagram of a correspondence between candidate processing orders of code blocks and multiple location relationships according to an embodiment of the present invention;
FIG. 6 is a flowchart of encoding on an encoder side according to an embodiment of the present invention;
FIG. 7 is a flowchart of decoding on a decoder side according to an embodiment of the present invention;
FIG. 8 is a schematic block diagram of an encoder according to an embodiment of the present invention;
FIG. 9 is a schematic block diagram of a decoder according to an embodiment of the present invention;
FIG. 10 is a schematic block diagram of an encoder according to another embodiment of the present invention; and
FIG. 11 is a schematic block diagram of a decoder according to another embodiment of the present invention.

DESCRIPTION OF EMBODIMENTS

The following clearly and completely describes the technical solutions in the embodiments of the present invention with reference to the accompanying drawings in the embodiments of the present invention. Apparently, the described embodiments are some but not all of the embodiments of the present invention. All other embodiments obtained by a person of ordinary skill in the art based on the embodiments of the present invention without creative efforts shall fall within the protection scope of the present invention.

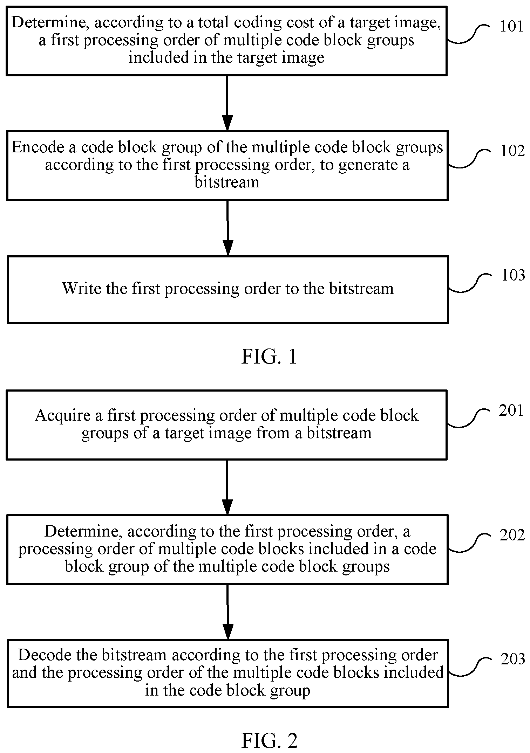

FIG. 1 is a flowchart of an encoding method according to an embodiment of the present invention.

101. Determine, according to a total coding cost of a target image, a first processing order of multiple code blocks groups included in the target image.

102. Encode a code blocks group of the multiple code blocks groups according to the first processing order, to generate a bitstream.

103. Write the first processing order to the bitstream.

In this embodiment of the present invention, a first processing order of multiple code blocks groups included in a target image is determined according to a total coding cost of the target image, and the multiple code blocks groups are encoded according to the first processing order, so that a spatial correlation in the target image can be fully utilized, thereby improving compression efficiency during encoding.

It should be understood that, the target image in this embodiment of the present invention is a to-be-encoded image, or may be referred to as a coded image. The target image is divided into multiple non-overlapping code blocks groups, where the code blocks group may be equivalent to a coding tree unit CTU in the HEVC, or may be equivalent to a macroblock MB in the H.264/AVC, or the like. The code blocks group may continue to be divided into multiple code blocks for which coding parameters can be independently determined, where the code block may be equivalent to a code unit CU in the HEVC, or may be equivalent to a sub macroblock SMB in the H.264/AVC, or the like.

In an embodiment, step 101 includes: determining a total coding cost corresponding to each processing order of all processing orders of the multiple code blocks groups, where the total coding cost corresponding to each processing order is a sum of coding costs when the multiple code blocks groups are encoded according to each processing order; and determining that a processing order corresponding to a minimum total coding cost of the total coding costs corresponding to all the processing orders is the first processing order.

Specifically, when code blocks groups are processed in different processing orders, a coding cost of each code blocks group varies with the processing order. The coding cost of the code blocks group is an important criterion for measuring quality of encoding of the blocks group. When a coding cost is calculated, a quantity of bits consumed to encode the block and quality of the block after reconstruction. A smaller value of the coding cost indicates better encoding of the block. Therefore, a processing order that can achieve a minimum total coding cost of all code blocks groups may be used as an optimum processing order. Therefore, a question of determining an optimum processing order may be converted into a question of solving a minimum total coding cost:

$$J(O_{S_N}) = \min DP(S_N, O_{S_N}) = \min \sum_{j=1, i \in \left\{1 \le i \le N, i \notin S_{j,k}\right\}}^{N} RD(S_{j,k}, i) \quad (1),$$

where

$N$ indicates a total quantity of code blocks groups; $1 \le i \le N$ represents that indexes of the code blocks groups are indicated in a left-to-right top-to-bottom order; $O$ is a vector indicating a processing order of the code blocks groups; each item of $O$ is an arrangement manner of indexes of the code blocks groups, total possible processing orders are a permutation $N!$ of $N$; a processing order indicated when $O = [1, 2, ..., N]$ is a traditional line scan processing order; $S_{j,k}$ is a set, including indexes of j blocks groups that are already processed; k indicates that the j blocks group that are already processed is the $k^{th}$ combination of $C_N^j$ possible combinations of j blocks groups selected from the N blocks groups; i indicates one of blocks groups that are not encoded; $RD(S_{j,k}, i)$ indicates a cost required for processing a code blocks group i in a case in which all code blocks groups in $S_{j,k}$ have been processed; $S_N$ indicates a set of all N code blocks groups; $O_{S_N}$ indicates an optimum processing order of the N code blocks groups; and an objective of the optimum question is to find a processing order $O_{S_N}$, so that a total cost $DP(S_N, O_{S_N})$ of all the N code blocks groups is the minimum.

To solve $J(O_{S_N})$, a cost $RD(S_{j,k}, i)$ of each code blocks group needs to be calculated. After a cost $RD(S_{j,k}, i)$ of one code blocks group is obtained, a method described in a formula (2) may be used to determine an optimum processing order of the code blocks groups:

$$DP(S_{j+1,k}, O_{S_{j,k}}) = \min_{i \in \left\{1 \le i \le N, i \notin S_{j,k}\right\}} \left\{DP(S_{j,k}, O_{S_{j,k}}) + RD(S_{j,k}, i)\right\} \quad (2),$$

where

$j, 1 \le j \le N-1$ indicates a quantity of code blocks groups that are already processed; $k, 1 \le k \le C_N^k$ indicates the $k^{th}$ combination of all possible combinations of the j blocks groups that are already processed; $S_{j,k}$ is a set, including indexes of the j blocking groups that are already processed in the foregoing case of the $k^{th}$ combination; a cost function $DP(S_{j,k}, O_{S_{j,k}})$ indicates a sum of costs of all blocking groups in a code blocks group set $S_{j,k}$, that is, a total cost required to process, by using the optimum processing order $O_{S_{j,k}}$, the j code blocks groups included in $S_{j,k}$; and $RD(S_{j,k}, i)$ indicates a cost caused when the blocking group i is encoded in a case in which all the j blocks groups indicated by the $k^{th}$ combination indicated by $S_{j,k}$ have been processed.

An example is provided for describing the foregoing process, where there are three code blocks groups

EP 3 094 091 B1

numbered 1, 2, and 3 to be processed. When j=2, there are three possible cases for $S_{j,k}$, that is, $S_{j,k}=\{1,2\}$, $S_{j,k}=\{1,3\}$, and $S_{j,k}=\{2,3\}$, optimum encoding orders thereof are $O_{\{1,2\}}=1, 2$, $O_{\{1,3\}}=3,1$, and $O_{\{2,3\}}=3, 2$, and optimum costs corresponding thereto are $DP(\{1, 2\}, O_{\{1,2\}})$, $DP(\{1, 3\}, O_{\{1,3\}})$, and $DP(\{2, 3\}, O_{\{2,3\}})$. Further, a case in which j=3 is considered. In the three possible cases for $S_{j,k}$, other code blocks groups are respectively a blocking group numbered 3, a blocking group numbered 2, and a blocking group numbered 1, and corresponding costs for encoding the blocking groups are respectively $RD(\{1,2\},3)$, $RD(\{1,3\},2)$, and $RD(\{2,3\},1)$. In this case, a minimum cost $DP(\{1, 2, 3\}, O_{\{1,2,3\}})$ of the three code blocks groups with encoding numbers 1, 2, and 3 may be obtained by means of calculation by using a formula (3) (3), and subsequently, an optimum processing order $O_{\{1,2,3\}}$ is determined.

$$DP(\{1,2,3\},O_{\{1,2,3\}}) = \min\begin{cases} DP(\{2,3\},O_{\{2,3\}}) + RD(\{2,3\},1), \\ DP(\{1,2\},O_{\{1,2\}}) + RD(\{1,2\},3), \\ DP(\{1,3\},O_{\{1,3\}}) + RD(\{1,3\},2). \end{cases} \quad (3)$$

In an embodiment, step 102 includes: determining, according to the first processing order, a processing order of multiple code blocks included in the code blocks group; and encoding the code blocks group according to the first processing order and the processing order of the multiple code blocks included in the code blocks group.

Specifically, after the processing order of the code blocks groups is determined, the processing order of the code blocks included in the code blocks group may further need to be determined. A processing order of code blocks in a current code blocks group may be determined according to the processing order of the code blocks groups. That is, a processing order between the current code blocks group and a code blocks group adjacent to the current code blocks group may be determined according to the processing order of the code blocks groups, so that the processing order of the code blocks in the current code blocks group is determined. The code blocks in the current code blocks group may have multiple preset candidate processing orders, where each candidate processing order corresponds to one location relationship, and the location relationship is a relative location relationship between a currently processed code blocks group and a code blocks group that is already processed and that is adjacent to the currently processed code blocks group. When the current code blocks group is to be encoded, a relative location relationship between the current code blocks group and a code blocks group that is already encoded and that is adjacent or close to the current code blocks group may be first determined, and then a processing order of code blocks in a corresponding code blocks group is determined in a preconfigured correspondence according to the determined relative location relationship. After the processing order of the code blocks is determined, all code blocks in the current code blocks group are encoded according to the processing order, and after the encoding is finished, a next code blocks group is processed according to the first processing order. Similar to the current code blocks group, a processing order of code blocks in the next code blocks group needs to be determined according to a relative location relationship, and so on, until all code blocks groups of the target image are completely encoded according to the first processing order.

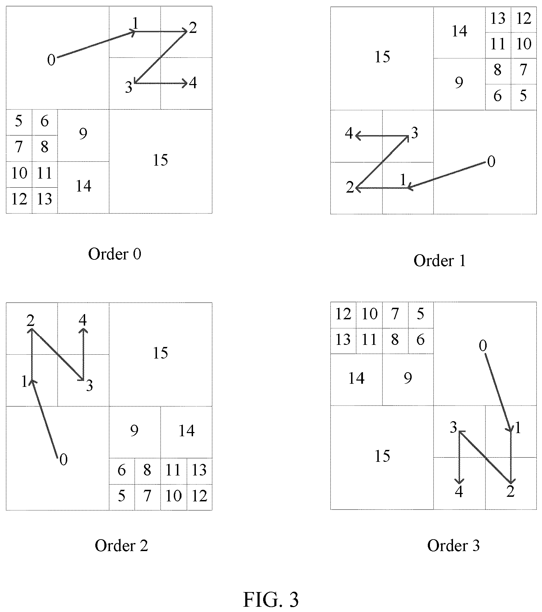

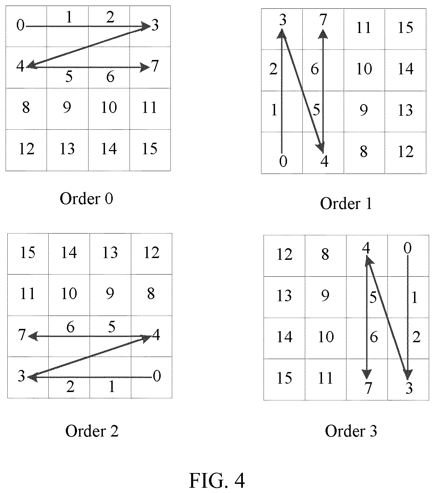

Before the determining, according to the first processing order, a processing order of multiple code blocks included in each code blocks group of the code blocks groups, the method further includes: determining multiple candidate processing orders of the code blocks; and determining a correspondence between the multiple candidate processing orders and multiple location relationships, where the multiple location relationships are multiple relative location relationships between a currently processed code blocks group and a code blocks group that is already processed and that is adjacent to the currently processed code blocks group. The determining multiple candidate processing orders of the code blocks includes: using preset multiple candidate processing orders of the code blocks. The preset multiple candidate processing orders of the code blocks may be determined by using multiple methods. For example, the preset multiple candidate processing orders of the code blocks are determined according to a division manner of the code blocks included in the code blocks group. The division manner of the code blocks is equal-size division, that is, sizes of the code blocks in the code blocks group are equal, for example, in the H.264/AVC. In a case of equal-size division, the preset multiple candidate processing orders of the code blocks may be shown in FIG. 4. In a case of non-equal-size division, the preset multiple candidate processing orders of the code blocks may be shown in FIG. 3 which refers to a non-claimed scheme.

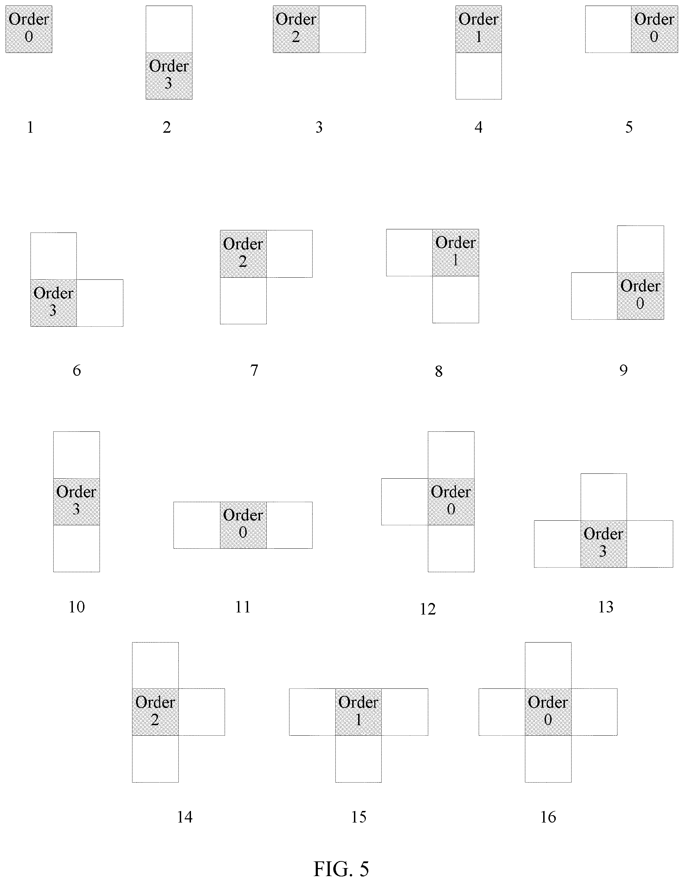

Four processing orders of code blocks shown in FIG. 4 are preset, where an order 0 is progressive scanning from left to right, an order 2 is progressive scanning from right to left, an order 3 is column-by-column scanning from top to bottom, and an order 1 is column-by-column scanning from bottom to top. The relative locations of the code blocks group and the code blocks group that is already encoded may be 16 relative locations shown in FIG. 5: 1. There is no code blocks group that is already encoded and that is adjacent to the code blocks group. 2. A code blocks group above the code blocks group has been encoded. 3. A code blocks group on the right of the code blocks group has been encoded. 4. A code blocks group below the code blocks group has been encoded. 5. A code blocks group on the left of the code blocks group has been encoded. 6. Code blocks groups above and on the right of the code blocks group have been encoded. 7. Code blocks groups below and on the right of the code blocks group have been encoded. 8. Code blocks groups on the left of and below the code blocks group have been encoded. 9. Code blocks groups on the left of and above the code blocks group have been encoded. 10. Code blocks groups above and below the code blocks group have been encoded. 11. Code blocks groups on the left and on the right of the code blocks group have been encoded. 12. Code blocks groups above, below, and on the left of the code blocks group have been encoded. 13. Code blocks groups on the left of, on the right of, and above the code blocks group have been encoded. 14. Code blocks groups above, below, and on the right of the code blocks group have been encoded. 15. Code blocks groups on the left of, on the right of, and below the code blocks group have been encoded. 16. Code blocks groups above, below, on the left of, and on the right of the code blocks group have been encoded.

The encoder side further preconfigures a correspondence between the foregoing four processing orders and the foregoing 16 relative location relationships. Inter alia, a relative location relationship 1 corresponds to the order 0, a relative location relationship 2 corresponds to the order 3, and a relative location relationship 3 corresponds to the order 2.

It can be learned from the foregoing correspondence that, when a different code blocks group processing order is given, a corresponding case is selected from the foregoing 16 cases for the current code blocks group. A processing order of code blocks in the current code blocks group is subsequently determined, then an encoding operation is performed on the code blocks in the current code blocks group according to the given code block processing order, and a coding cost is calculated.

Herein, for the determining of the code block processing order, a pixel value in the current code blocks group is predicted by using as much as possible a pixel value in an adjacent code blocks group that is already processed. A spatial correlation of a coded image is relatively fully considered, which helps improve compression efficiency.

The determining, according to the first processing order, a processing order of multiple code blocks included in the code blocks group includes: determining, according to the first processing order, a relative location relationship between the code blocks group and a code blocks group that is already processed and that is adjacent to the code blocks group; and determining, according to the relative location relationship and a correspondence between the preset multiple candidate processing orders and the multiple location relationships, the processing order of the multiple code blocks included in the code blocks group, where the multiple location relationships are multiple relative location relationships between a currently processed code blocks group and a code blocks group that is already processed and that is adjacent to the currently processed code blocks group.

That is, both the multiple candidate processing orders of the code blocks and the correspondence between the multiple candidate processing orders and the multiple location relationships may be preset. When determining the processing order of the code blocks in the currently processed code blocks group, the encoder side may determine, directly according to the preset correspondence, the processing order corresponding to the code blocks in the currently processed code blocks group, where the multiple candidate processing orders and the correspondence are similar to those in the foregoing embodiment, and details are not described herein again.

Optionally, in an embodiment, the writing the first processing order to the bitstream includes: arranging indexes of the code blocks group according to the first processing order; and encoding the arranged indexes of the code blocks group and writing the arranged indexes to the bitstream; or arranging coordinates of the code blocks group according to the first processing order; and encoding the arranged coordinates of the code blocks group and writing the arranged coordinates to the bitstream.

Specifically, after the processing order of the code blocks groups is determined, the processing order may be written to the bitstream by means of indexes or coordinates, or in another manner, so that when a decoder side performs decoding, the decoder side can directly acquire an encoding order of the code blocks groups during encoding. Specifically, there may be the following two manners:

In one manner, index numbers, for example, 0 to N-1, may be allocated to the code blocks groups in the coded image by means of line scan from left to right and from top to bottom. The N index numbers are written to the bitstream according to the optimum processing order obtained by means of calculation.

In the other manner, a horizontal coordinate value and a vertical coordinate value may be allocated to the code blocks group from left to right and from top to bottom. For example, $(x, y)$ indicates a code block. If a coded image has w code blocks groups and h code blocks groups respectively in a horizontal direction and a vertical direction, the coded image has N code blocks groups in total, where $N = w * h$, and value ranges of x and y are respectively $0 \leq x \leq w - 1$ and $0 \leq y \leq h-1$. The N groups of coordinates may be encoded according to the optimum processing order obtained by means of calculation. For example, the N horizontal coordinate values and the N vertical coordinate values may be independently sequentially encoded by using an encoding manner similar to pulse code modulation (Pulse Code Modulation, PCM). Alternatively, the N horizontal coordinate values and the N vertical coordinate values may be encoded by using an encoding manner similar to differential pulse code modulation

(Differential Pulse Code Modulation, DPCM).

After an optimum processing order O of the code blocks groups is encoded by using the foregoing method, a result of the encoding is output to a video bitstream, so that the decoder side performs decoding according to the optimum processing order.

Optionally, in an embodiment, a coding cost of the code blocks group includes at least one of the following: a quantity of bits consumed to encode the code blocks group; or distortion of the code blocks group. The coding cost of the code blocks group is an important criterion for measuring quality of encoding of the blocks group. When a coding cost is calculated, a quantity of bits consumed to encode the block and quality of the block after reconstruction. A smaller value of the coding cost indicates better encoding of the block.

It should be understood that, when a target image is to be encoded, a first processing order of code blocks groups included in the target image may be determined according to the method in this embodiment of the present invention. When a processing order of code blocks in the code blocks groups is determined, a processing order of code blocks in some code blocks groups may be determined, and a processing order of code blocks in other code blocks groups may be determined according to another technical solution or predetermined.

In this embodiment of the present invention, a first processing order of multiple code blocks groups included in a target image is determined according to a total coding cost of the target image, and the multiple code blocks groups are encoded according to the first processing order, so that a spatial correlation in the target image can be fully utilized, thereby improving compression efficiency during encoding.

FIG. 2 is a flowchart of a decoding method according to an embodiment of the present invention.

201. Acquire a first processing order of multiple code blocks groups of a target image from a bitstream.

202. Determine, according to the first processing order, a processing order of multiple code blocks included in a code blocks group of the multiple code blocks groups.

203. Decode the bitstream according to the first processing order and the processing order of the multiple code blocks included in the code blocks group.

In this embodiment of the present invention, a processing order of code blocks included in each code blocks group is determined according to a first processing order that can achieve a minimum total coding cost and that is determined on an encoder side, and a bitstream of a target image is decoded according to the first processing order and the processing order of the code blocks in each code blocks group. In an encoding process, a spatial correlation of the target image is fully utilized, thereby improving compression efficiency during encoding.

Optionally, in an embodiment, before the determining, according to the first processing order, a processing order of multiple code blocks included in a code blocks group of the multiple code blocks groups, the method further includes: determining multiple candidate processing orders of the code blocks; and determining a correspondence between the multiple candidate processing orders and multiple location relationships, where the multiple location relationships are multiple relative location relationships between a currently processed code blocks group and a code blocks group that is already processed and that is adjacent to the currently processed code blocks group.

To ensure matching between encoding and decoding, a decoder side uses a solution that is the same as a solution used by the encoder side to determine, according to the processing order of the code blocks group, a processing order of code blocks in a current code blocks group. The code blocks in the current code blocks group may have multiple preset candidate processing orders, where each candidate processing order corresponds to one location relationship, and the location relationship is a relative location relationship between a currently processed code blocks group and a code blocks group that is already processed and that is adjacent to the currently processed code blocks group. When the current code blocks group is to be decoded, a relative location relationship between the current code blocks group and a code blocks group that is already decoded and that is adjacent or close to the current code blocks group may be first determined, and then a processing order of code blocks in a corresponding code blocks group is determined in a preconfigured correspondence according to the determined relative location relationship. After the processing order of the code blocks is determined, all code blocks in the current code blocks group are decoded according to the processing order, and after the decoding is finished, a next code blocks group is processed according to the first processing order. Similar to the current code blocks group, a processing order of code blocks in the next code blocks group needs to be determined according to a relative location relationship, and so on, until all code blocks groups of the target image are completely decoded according to the first processing order.

The determining, according to the first processing order, a processing order of code blocks in each code blocks group of the multiple code blocks groups includes: determining, according to the first processing order, a relative location relationship between the code blocks group and a code blocks group that is already processed and that is adjacent to the code blocks group; and determining, according to the correspondence and the relative location relationship, the processing order of the multiple code blocks included in the code blocks group. Tthe determining multiple candidate processing orders of the code blocks includes: using preset multiple candidate processing orders of the code blocks. The preset multiple candidate processing orders of the code blocks may be determined by using multiple methods. For example, the preset multiple candidate processing orders of the code blocks are determined according to a division manner of the code blocks included in the code blocks group. The division manner of the code blocks is equal-size division, that is, sizes of the code blocks in the code blocks group are equal, for example, in the H.264/AVC. In a case of equal-size division, the preset multiple candidate processing orders of the code blocks are shown in FIG. 4. In a case of non-equal-size division, the preset multiple candidate processing orders of the code blocks may be shown in FIG. 3 which refers to a non-claimed scheme.

Four processing orders of code blocks shown in FIG. 4 are preset, where an order 0 is progressive scanning from left to right, an order 2 is progressive scanning from right to left, an order 3 is column-by-column scanning from top to bottom, and an order 1 is column-by-column scanning from bottom to top. The relative locations of the code blocks group and the code blocks group that is already decoded may be 16 relative locations shown in FIG. 5: 1. There is no code blocks group that is already decoded and that is adjacent to the code blocks group. 2. A code blocks group above the code blocks group has been decoded. 3. A code blocks group on the right of the code blocks group has been decoded. 4. A code blocks group below the code blocks group has been decoded. 5. A code blocks group on the left of the code blocks group has been decoded. 6. Code blocks groups above and on the right of the code blocks group have been decoded. 7. Code blocks groups below and on the right of the code blocks group have been decoded. 8. Code blocks groups on the left of and below the code blocks group have been decoded. 9. Code blocks groups on the left of and above the code blocks group have been decoded. 10. Code blocks groups above and below the code blocks group have been decoded. 11. Code blocks groups on the left and on the right of the code blocks group have been decoded. 12. Code blocks groups above, below, and on the left of the code blocks group have been decoded. 13. Code blocks groups on the left of, on the right of, and above the code blocks group have been decoded. 14. Code blocks groups above, below, and on the right of the code blocks group have been decoded. 15. Code blocks groups on the left of, on the right of, and below the code blocks group have been decoded. 16. Code blocks groups above, below, on the left of, and on the right of the code blocks group have been decoded.

The decoder side further preconfigures a correspondence between the foregoing four processing orders and the foregoing 16 relative location relationships. Inter alia, a relative location relationship 1 corresponds to the order 0, a relative location relationship 2 corresponds to the order 3, and a relative location relationship 3 corresponds to the order 2.

It can be learned from the foregoing correspondence that, when a different code blocks group processing order is given, a corresponding case is selected from the foregoing 16 cases for the current code blocks group. A processing order of code blocks in the current code blocks group is subsequently determined, and then a decoding operation is performed on the code blocks in the current code blocks group according to the given code block processing order.

It should be understood that, the foregoing multiple preset modes and correspondences of the decoder side are the same as preset modes and correspondences of the encoder side.

The determining, according to the first processing order, a processing order of multiple code blocks included in the code blocks group includes: determining, according to the first processing order, a relative location relationship between the code blocks group and a code blocks group that is already processed and that is adjacent to the code blocks group; and determining, according to the relative location relationship and a correspondence between the preset multiple candidate processing orders and the multiple location relationships, the processing order of the multiple code blocks included in the code blocks group, where the multiple location relationships are multiple relative location relationships between a currently processed code blocks group and a code blocks group that is already processed and that is adjacent to the currently processed code blocks group.

That is, both the multiple candidate processing orders of the code blocks and the correspondence between the multiple candidate processing orders and the multiple location relationships may be preset. When determining the processing order of the code blocks in the currently processed code blocks group, the encoder side may determine, directly according to the preset correspondence, the processing order corresponding to the code blocks in the currently processed code blocks group, where the multiple candidate processing orders and the correspondence are similar to those in the foregoing embodiment, and details are not described herein again.

Optionally, in an embodiment, step 201 includes: decoding the bitstream to obtain arranged indexes of the multiple code blocks groups; and determining the first processing order according to an arrangement order of the indexes of the multiple code blocks groups; or decoding the bitstream to obtain arranged coordinates of the multiple code blocks groups; and determining the first processing order according to an arrangement order of the coordinates of the multiple code blocks groups.

Specifically, after determining the processing order of the code blocks groups, the encoder side may write the processing order to the bitstream by means of indexes or coordinates, or in another manner, so that when the decoder side performs decoding, the decoder side can directly acquire an encoding order of the code blocks groups during encoding. Specifically, there may be the following two manners:

In one manner, index numbers, for example, 0 to N-1, may be allocated to the code blocks groups in the coded image by means of line scan from left to right and from top to bottom. The N index numbers are written to the bitstream according to the optimum processing order obtained by means of calculation.

In the other manner, a horizontal coordinate value and a vertical coordinate value may be allocated to the code blocks group from left to right and from top to bottom. For example, $(x, y)$ indicates a code block. If a coded image has w code blocks groups and h code blocks groups respectively in a horizontal direction and a vertical direction, the coded image has N code blocks groups in total, where $N = w * h$, and value ranges of x and y are respectively $0 \leq x \leq w - 1$ and

$0 \leq y \leq h$-1. The N groups of coordinates may be encoded according to the optimum processing order obtained by means of calculation. For example, the N horizontal coordinate values and the N vertical coordinate values may be independently sequentially encoded by using an encoding manner similar to pulse code modulation (Pulse Code Modulation, PCM). Alternatively, the N horizontal coordinate values and the N vertical coordinate values may be encoded by using an encoding manner similar to differential pulse code modulation (Differential Pulse Code Modulation, DPCM).

That is, correspondingly, the decoder side may learn the processing order of the code blocks groups in the foregoing two manners according to information that is written by the encoder side to the bitstream.

In this embodiment of the present invention, a processing order of code blocks included in each code blocks group is determined according to a first processing order that can achieve a minimum total coding cost and that is determined on an encoder side, and a bitstream of a target image is decoded according to a first processing order and the processing order of the code blocks in each code blocks group. In an encoding process, a spatial correlation of the target image is fully utilized, thereby improving compression efficiency during encoding.

FIG. 3 is a schematic diagram of a processing order of code blocks which refers to a non-claimed scheme. FIG. 4 is a schematic diagram of a processing order of code blocks according to the present invention.

If code blocks in a code blocks group have different sizes, which is similar to a case in which, for example, CUs in a CTU in the HEVC may have different sizes, an order of line scan is not proper to be used to process the code blocks. In this case, the four processing orders shown in FIG. 3 may be selected as preset processing orders of the code blocks. If the code blocks in the code blocks group have a same size, which is similar to a case in which, for example, SMBs in an MB in the H.264/AVC have a same size, the four processing orders of progressive scanning shown in FIG. 4 are selected as preset processing orders of the code blocks. A number on a code block represents a processing order of the corresponding code block.

FIG. 5 is a schematic diagram of a correspondence between candidate processing orders of code blocks and multiple location relationships according to an embodiment of the present invention.

Four processing orders of code blocks are preset, where an order 0 is progressive scanning from left to right, an order 2 is progressive scanning from right to left, an order 3 is column-by-column scanning from top to bottom, and an order 1 is column-by-column scanning from bottom to top. The relative locations of the code blocks group and the code blocks group that is already encoded may be preset to 16 relative locations shown in FIG. 5: 1. There is no code blocks group that is already encoded and that is adjacent to the code blocks group. 2. A code blocks group above the code blocks group has been encoded. 3. A code blocks group on the right of the code blocks group has been encoded. 4. A code blocks group below the code blocks group has been encoded. 5. A code blocks group on the left of the code blocks group has been encoded. 6. Code blocks groups above and on the right of the code blocks group have been encoded. 7. Code blocks groups below and on the right of the code blocks group have been encoded. 8. Code blocks groups on the left of and below the code blocks group have been encoded. 9. Code blocks groups on the left of and above the code blocks group have been encoded. 10. Code blocks groups above and below the code blocks group have been encoded. 11. Code blocks groups on the left and on the right of the code blocks group have been encoded. 12. Code blocks groups above, below, and on the left of the code blocks group have been encoded. 13. Code blocks groups on the left of, on the right of, and above the code blocks group have been encoded. 14. Code blocks groups above, below, and on the right of the code blocks group have been encoded. 15. Code blocks groups on the left of, on the right of, and below the code blocks group have been encoded. 16. Code blocks groups above, below, on the left of, and on the right of the code blocks group have been encoded.

The encoder side further preconfigures a correspondence between the foregoing four processing orders and the foregoing 16 relative location relationships. Inter alia, a relative location relationship 1 corresponds to the order 0, a relative location relationship 2 corresponds to the order 3, and a relative location relationship 3 corresponds to the order 2.

It should be understood that the correspondence shown in FIG. 5 is used only for ease of description by examples. In practice, any quantity of processing orders and any quantity of relative location relationships may be preset, and a processing order may be arbitrary or skipped, which is not limited in the present invention.

It can be learned from the foregoing correspondence that, when a different code blocks group processing order is given, a corresponding case is selected from the foregoing 16 cases for the current code blocks group. A processing order of code blocks in the current code blocks group is subsequently determined, then an encoding operation is performed on the code blocks in the current code blocks group according to the given code block processing order, and a coding cost is calculated. For example, when the current code blocks group is to be processed according to the first processing order, it can be first determined that code blocks groups on the left and right of the current code blocks group have been encoded. It is determined according to the relative location relationships in FIG. 5 that a current code block is in a location relationship 11, and a code block processing order corresponding to the current code block is an order 0. Subsequently, the encoder side performs progressive scanning from left to right on the code blocks in the code blocks group according to the order 0, to encode the code blocks. After all the code blocks are completely encoded, a next code blocks group is processed according to a first encoding order.

Herein, for the determining of the code block processing order, a pixel value in the current code blocks group is predicted by using as much as possible a pixel value in an adjacent code blocks group that is already processed. A spatial correlation of a coded image is relatively fully considered, which helps improve compression efficiency.

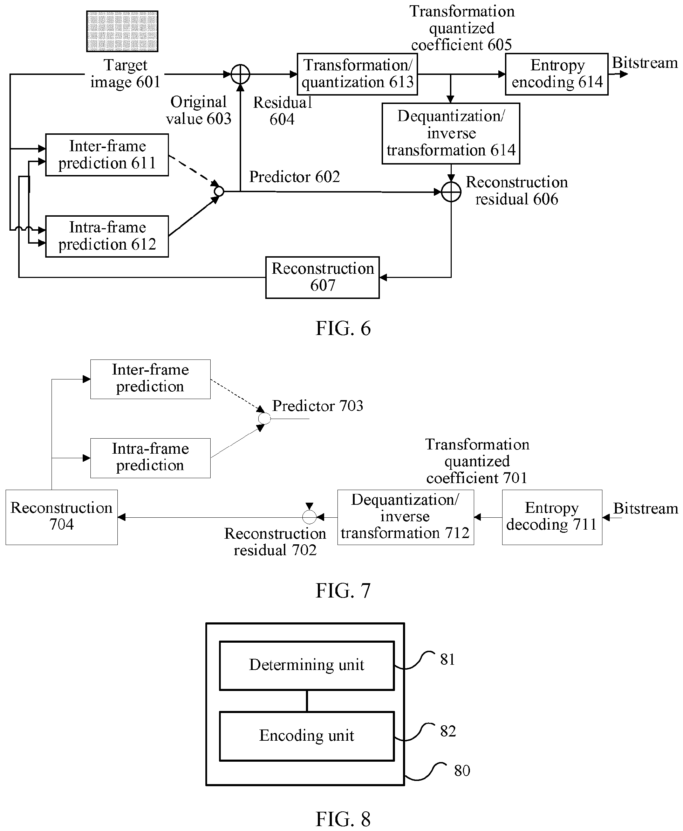

FIG. 6 is a flowchart of encoding on an encoder side according to an embodiment of the present invention.

First, a target image 601 is divided into multiple non-overlapping code blocks groups. A division method for a code blocks group may depend on an encoding and decoding standard. For example, a code blocks group obtained by means of division in the HEVC may be a CTU, and a code blocks group obtained by means of division in the H.264/AVC may be an MB. In addition, division of the code blocks group may also be preset or arbitrary. Further, the code blocks group may further continue to be divided into multiple code blocks for which coding parameters can be independently determined. The foregoing code blocks group or code block is a set of pixels. For example, if a size of the code block is NxN, it indicates that the block is a two-dimensional pixel array, which has an N-pixel size in both a horizontal direction and a vertical direction.

The encoder side performs a prediction operation on the code block, to acquire a predictor 602 of a pixel in the code block. The prediction operation may be generally classified into inter-frame prediction 611 and intra-frame prediction 612. Further, a difference between an original value 603 of the pixel of the code block and a predictor 602 of the pixel of the code block is calculated. A set of predicted differences of pixels in the code block is referred to as a residual 604 of the code block. After transformation and quantization 613 are performed on the residual 604, a transformation quantized coefficient 605 is obtained. Finally, an entropy encoding 614 operation is performed on the transformation quantized coefficient 605, and a bit string output in entropy encoding is written to a bitstream. In addition, dequantization and inverse transformation 614 operations are performed on the transformation quantized coefficient 605 on which transformation and quantization 613 have been performed, to obtain a reconstruction residual 606, and the reconstruction residual 606 and the predictor 602 of the current code block are added together to obtain reconstruction 607 of the block. Reconstruction 607 of the current block is to be used for predicting a subsequent code block, where the subsequent code block may be a to-be-processed code block in a current coded image, or may be a code block in a subsequent to-be-encoded image.

Before performing predictive coding on the target image 601, the encoder side first determines a processing order of multiple code blocks groups included in the target image 601. Specifically, when the code blocks groups are processed in different processing orders, a coding cost of each code blocks group varies with the processing order. Therefore, it is determined that a processing order that can achieve a minimum total coding cost of all code blocks groups is used as a processing order of the code blocks groups when encoding is actually performed. For a specific determining method, reference may be made to related steps and the formulas (1) and (2), and the like in the foregoing embodiment in FIG. 1, and details are not described herein again.

After the processing order of the code blocks groups is determined, a processing order of code blocks in each code blocks group is determined. Specifically, a processing order between a current code blocks group and a code blocks group adjacent to the current code blocks group is determined according to the processing order of the code blocks groups, so that a processing order of code blocks in the current code blocks group is determined. The code blocks in the current code blocks group have multiple preset candidate processing orders, where each candidate processing order corresponds to one location relationship, and the location relationship is a relative location relationship between a currently processed code blocks group and a code blocks group that is already processed and that is adjacent to the currently processed code blocks group. When the current code blocks group is to be encoded, a relative location relationship between the current code blocks group and a code blocks group that is already encoded and that is adjacent or close to the current code blocks group is first determined, and then a processing order of code blocks in a corresponding code blocks group is determined in a preconfigured correspondence according to the determined relative location relationship. After the processing order of the code blocks is determined, all code blocks in the current code blocks group are encoded according to the processing order, and after the encoding is finished, a next code blocks group is processed according to the processing order of the code blocks groups. Similar to the current code blocks group, a processing order of code blocks in the next code blocks group needs to be determined according to a relative location relationship, and so on, until all code blocks groups of the target image are completely encoded according to the processing order. The foregoing "processing" may include the prediction operations 611 and 612, the operation of determining the residual 604, the transformation/quantization 613 operation, the entropy encoding 614 operation, the dequantizaiton/inverse transformation 614 operation, the reconstruction 607 operation, and the like.

In addition, when a bitstream is generated, the processing order of the code blocks groups may be written to the bitstream, so that a decoder side performs decoding according to the order. For an identification method for a specific processing order, reference may be made to a corresponding method in FIG. 1, and details are not described herein again.

A processing order of multiple code blocks groups included in a target image is determined according to a total coding cost of the target image, and the multiple code blocks groups are encoded according to the processing order, so that a spatial correlation in the target image can be fully utilized, thereby improving compression efficiency during encoding.

FIG. 7 is a flowchart of decoding on a decoder side according to an embodiment of the present invention.

A processing method of the decoder side corresponds to that of an encoder side. After obtaining a bitstream encoded and output by the encoder side, the decoder side acquires, from the bitstream, a processing order when the encoder side encodes a code blocks group. According to the processing order, the decoder side determines a relative location relationship between a currently processed code blocks group and a code blocks group that is already decoded and that is adjacent or close to the currently processed code blocks group, and then a processing order of code blocks in a corresponding code blocks group is determined in a preconfigured correspondence according to the determined relative location relationship. After the processing order of the code blocks is determined, all code blocks in the current code blocks group are decoded according to the processing order, and after the decoding is finished, a next code blocks group is processed according to the first processing order. Similar to the current code blocks group, a processing order of code blocks in the next code blocks group needs to be determined according to a relative location relationship, and so on, until all code blocks groups of the target image are completely decoded according to the first processing order. Specifically, reference may be made to the foregoing method in FIG. 2, and details are not described herein again. It should be understood that, the foregoing "processing" by the decoder side includes performing entropy decoding 711 on an input bitstream to obtain prediction mode information and a transformation quantized coefficient 701. A decoder uses the prediction mode information and a block or image that is already reconstructed to obtain prediction of a current code block, dequantization/inverse transformation 712 is performed on the transformation quantized coefficient 701 to obtain a reconstruction residual 702, and the reconstruction residual 702 and a predictor 703 of the current code block are added together to obtain reconstruction 704 of the code block. The encoder side writes information about each code block to the bitstream according to a determined processing order of code blocks groups and a processing order of code blocks in the code blocks group. Correspondingly, the decoder side sequentially put reconstructed blocks, which are obtained by means of decoding, of the code blocks into a reconstructed image in the foregoing order.

In this embodiment of the present invention, a processing order of multiple code blocks groups included in a target image is determined according to a total coding cost of the target image, and the multiple code blocks groups are encoded according to the processing order, so that a spatial correlation in the target image can be fully utilized, thereby improving compression efficiency during encoding.

FIG. 8 is a schematic block diagram of an encoder according to an embodiment of the present invention. The encoder 80 in FIG. 8 includes a determining unit 81 and an encoding unit 82.

The determining unit 81 determines, according to a total coding cost of a target image, a first processing order of multiple code blocks groups included in the target image. The encoding unit 82 encodes a code blocks group of the multiple code blocks groups according to the first processing order determined by the determining unit 81, to generate a bitstream; and the encoding unit 82 writes the first processing order determined by the determining unit 81 to the bitstream.

The encoder 80 in this embodiment of the present invention determines, according to a total coding cost of a target image, a first processing order of multiple code blocks groups included in the target image, and encode the multiple code blocks groups according to the first processing order, so that a spatial correlation in the target image can be fully utilized, thereby improving compression efficiency during encoding.

It should be understood that, the target image in this embodiment of the present invention is a to-be-encoded image, or may be referred to as a coded image. The target image is divided into multiple non-overlapping code blocks groups, where the code blocks group may be equivalent to a coding tree unit CTU in the HEVC, or may be equivalent to a macroblock MB in the H.264/AVC, or the like. The code blocks group may continue to be divided into multiple code blocks for which coding parameters can be independently determined, where the code block may be equivalent to a code unit CU in the HEVC, or may be equivalent to a sub macroblock SMB in the H.264/AVC, or the like.

The determining unit 81 is specifically configured to: determine a total coding cost corresponding to each processing order of all processing orders of the multiple code blocks groups, where the total coding cost corresponding to each processing order is a sum of coding costs when the multiple code blocks groups are encoded according to each processing order; and determine that a processing order corresponding to a minimum total coding cost of the total coding costs corresponding to all the processing orders is the first processing order.

Specifically, when code blocks groups are processed in different processing orders, a coding cost of each code blocks group varies with the processing order. The coding cost of the code blocks group is an important criterion for measuring quality of encoding of the blocks group. When a coding cost is calculated, a quantity of bits consumed to encode the block and quality of the block after reconstruction. A smaller value of the coding cost indicates better encoding of the block. Therefore, a processing order that can achieve a minimum total coding cost of all code blocks groups may be used as an optimum processing order. Therefore, a question of determining an optimum processing order may be converted into a question of solving a minimum total coding cost:

$$J(O_{S_N}) = \min DP(S_N, O_{S_N}) = \min \sum_{j=1, i \in \left\{1 \leq i \leq N, i \notin S_{j,k}\right\}}^{N} RD(S_{j,k}, i) \quad (4),$$

where
$N$ indicates a total quantity of code blocks groups; $1 \leq i \leq N$ represents that indexes of the code blocks groups are indicated in a left-to-right top-to-bottom order; $O$ is a vector indicating a processing order of the code blocks groups; each item of $O$ is an arrangement manner of indexes of the code blocks groups, total possible processing orders are a permutation $N!$ of $N$; a processing order indicated when $O=[1,2,...,N]$ is a traditional line scan processing order; $S_{j,k}$ is a set, including indexes of j blocks groups that are already processed; k indicates that the j blocks groups that are already processed are the kth combination of $C_N^j$ possible combinations of j blocks groups selected from the N blocks groups; i indicates one of blocks groups that are not encoded; $RD(S_{j,k},i)$ indicates a cost required for processing a code blocks group i in a case in which all code blocks groups in $S_{j,k}$ have been processed; $S_N$ indicates a set of all N code blocks groups; $O_{S_N}$ indicates an optimum processing order of the N code blocks groups; and an objective of the optimum question is to find a processing order $O_{S_N}$, so that a total cost $DP(S_N, O_{S_N})$ of all the N code blocks groups is the minimum.

To solve $J(O_{S_N})$, a cost $RD(S_{j,k},i)$ of each code blocks group needs to be calculated. After a cost $RD(S_{j,k},i)$ of one code blocks group is obtained, a method described in a formula (5) may be used to determine an optimum processing order of the code blocks groups.

$$DP(S_{j+1,k}, O_{S_{j,k}}) = \min_{i \in \{1 \le i \le N, i \notin S_{j,k}\}} \left\{ DP(S_{j,k}, O_{S_{j,k}}) + RD(S_{j,k}, i) \right\} \quad (5),$$

where

$j, 1 \le j \le N-1$ indicates a quantity of code blocks groups that are already processed; $k, 1 \le k \le C_N^k$ indicates the kth combination of all possible combinations of the j blocks groups that are already processed; $S_{j,k}$ is a set, including indexes of the j blocking groups that are already processed in the foregoing case of the kth combination; a cost function $DP(S_{j,k}, O_{S_{j,k}})$ indicates a sum of costs of all blocking groups in a code blocks group set $S_{j,k}$, that is, a total cost required to process, by using the optimum processing order $O_{S_{j,k}}$, the j code blocks groups included in $S_{j,k}$; and $RD(S_{j,k},i)$ indicates a cost caused when the blocking group i is encoded in a case in which all the j blocks groups indicated by the kth combination indicated by $S_{j,k}$ have been processed.

An example is provided for describing the foregoing process, where there are three code blocks groups numbered 1, 2, and 3 to be processed. When j=2, there are three possible cases for $S_{j,k}$, that is, $S_{j,k}=\{1,2\}$, $S_{j,k}=\{1,3\}$, and $S_{j,k}=\{2,3\}$, optimum encoding orders thereof are $O_{\{1,2\}}=1,2$, $O_{\{1,3\}}=3,1$, and $O_{\{2,3\}}=3,2$, and optimum costs corresponding thereto are $DP(\{1,2\}, O_{\{1,2\}})$, $DP(\{1,3\}, O_{\{1,3\}})$, and $DP(\{2,3\}, O_{\{2,3\}})$ $DP(\{2,3\}, O_{\{2,3\}})$. Further, a case in which j=3 is considered. In the three possible cases for $S_{j,k}$, other code blocks groups are respectively a blocking group numbered 3, a blocking group numbered 2, and a blocking group numbered 1, and corresponding costs for encoding the blocking groups are respectively $RD(\{1,2\},3)$, $RD(\{1,3\},2)$, and $RD(\{2,3\},1)$. In this case, a minimum cost $DP(\{1,2,3\}, O_{\{1,2,3\}})$ of the three code blocks groups with encoding numbers 1, 2, and 3 may be obtained by means of calculation by using a formula (6) (3), and subsequently, an optimum processing order $O_{\{1,2,3\}}$ is determined.

$$DP(\{1,2,3\}, O_{\{1,2,3\}}) = \min \begin{cases} DP(\{2,3\}, O_{\{2,3\}}) + RD(\{2,3\},1), \\ DP(\{1,2\}, O_{\{1,2\}}) + RD(\{1,2\},3), \\ DP(\{1,3\}, O_{\{1,3\}}) + RD(\{1,3\},2). \end{cases} \quad (6)$$

The encoding unit is specifically configured to: determine, according to the first processing order by using the determining unit, a processing order of multiple code blocks included in the code blocks group; and encode the code blocks group according to the first processing order and the processing order of the multiple code blocks included in the code blocks group.

Specifically, after the processing order of the code blocks groups is determined, the processing order of the code blocks included in the code blocks group further needs to be determined. A processing order of code blocks in a current code blocks group is determined according to the processing order of the code blocks groups. That is, a processing order between the current code blocks group and a code blocks group adjacent to the current code blocks group is determined according to the processing order of the code blocks groups, so that the processing order of the code blocks in the current code blocks group is determined. The code blocks in the current code blocks group have multiple preset candidate processing orders, where each candidate processing order corresponds to one location relationship, and the location relationship is a relative location relationship between a currently processed code blocks group and a code blocks group that is already processed and that is adjacent to the currently processed code blocks group. When the current code blocks group is to be encoded, a relative location relationship between the current code blocks group and a code blocks group that is already encoded and that is adjacent or close to the current code blocks group may be first determined, and then a processing order of code blocks in a corresponding code blocks group is determined in a preconfigured correspondence according to the determined relative location relationship. After the processing order of the code blocks is determined, all code blocks in the current code blocks group are encoded according to the processing order, and after the encoding is finished, a next code blocks group is processed according to the first processing order. Similar to the current code blocks group, a processing order of code blocks in the next code blocks group needs to be determined according to a relative location relationship, and so on, until all code blocks groups of the target image are completely encoded according to the first processing order.

The determining unit is further configured to: determine multiple candidate processing orders of the code blocks; and determine a correspondence between the multiple candidate processing orders and multiple location relationships, where the multiple location relationships are multiple relative location relationships between a currently processed code blocks group and a code blocks group that is already processed and that is adjacent to the currently processed code blocks group. The determining unit is further configured to use preset multiple candidate processing orders of the code blocks. The preset multiple candidate processing orders of the code blocks may be determined by using multiple methods. For example, the preset multiple candidate processing orders of the code blocks are determined according to a division manner of the code blocks included in the code blocks group. The division manner of the code blocks is equal-size division, that is, sizes of the code blocks in the code blocks group are equal, for example, in the H.264/AV. In a case of equal-size division, the preset multiple candidate processing orders of the code blocks are shown in FIG. 4. In a case of non-equal-size division, the preset multiple candidate processing orders of the code blocks may be shown in FIG. 3 which refers to a non-claimed scheme.

Four processing orders of code blocks shown in FIG. 4 are preset, where an order 0 is progressive scanning from left to right, an order 2 is progressive scanning from right to left, an order 3 is column-by-column scanning from top to bottom, and an order 1 is column-by-column scanning from bottom to top. The relative locations of the code blocks group and the code blocks group that is already encoded are 16 relative locations shown in FIG. 5: 1. There is no code blocks group that is already encoded and that is adjacent to the code blocks group. 2. A code blocks group above the code blocks group has been encoded. 3. A code blocks group on the right of the code blocks group has been encoded. 4. A code blocks group below the code blocks group has been encoded. 5. A code blocks group on the left of the code blocks group has been encoded. 6. Code blocks groups above and on the right of the code blocks group have been encoded. 7. Code blocks groups below and on the right of the code blocks group have been encoded. 8. Code blocks groups on the left of and below the code blocks group have been encoded. 9. Code blocks groups on the left of and above the code blocks group have been encoded. 10. Code blocks groups above and below the code blocks group have been encoded. 11. Code blocks groups on the left and on the right of the code blocks group have been encoded. 12. Code blocks groups above, below, and on the left of the code blocks group have been encoded. 13. Code blocks groups on the left of, on the right of, and above the code blocks group have been encoded. 14. Code blocks groups above, below, and on the right of the code blocks group have been encoded. 15. Code blocks groups on the left of, on the right of, and below the code blocks group have been encoded. 16. Code blocks groups above, below, on the left of, and on the right of the code blocks group have been encoded.

The encoder 80 further preconfigures a correspondence between the foregoing four processing orders and the foregoing 16 relative location relationships. Inter alia, a relative location relationship 1 corresponds to the order 0, a relative location relationship 2 corresponds to the order 3, and a relative location relationship 3 corresponds to the order 2.

It can be learned from the foregoing correspondence that, when a different code blocks group processing order is given, a corresponding case is selected from the foregoing 16 cases for the current code blocks group. A processing order of code blocks in the current code blocks group is subsequently determined, then an encoding operation is performed on the code blocks in the current code blocks group according to the given code block processing order, and a coding cost is calculated.

Herein, for the determining of the code block processing order, a pixel value in the current code blocks group is predicted by using as much as possible a pixel value in an adjacent code blocks group that is already processed. A spatial correlation of a coded image is relatively fully considered, which helps improve compression efficiency.

The determining unit is specifically configured to: determine, according to the first processing order, a relative location relationship between the code blocks group and a code blocks group that is already processed and that is adjacent to the code blocks group; and determine, according to the correspondence and the relative location relationship, the processing order of the multiple code blocks included in the code blocks group.

The determining unit is specifically configured to: determine, according to the first processing order, a relative location relationship between the code blocks group and a code blocks group that is already processed and that is adjacent to the code blocks group; and determine, according to the relative location relationship and a correspondence between the preset multiple candidate processing orders and the multiple location relationships, the processing order of the multiple code blocks included in the code blocks group, where the multiple location relationships are multiple relative location relationships between a currently processed code blocks group and a code blocks group that is already processed and that is adjacent to the currently processed code blocks group.

That is, both the multiple candidate processing orders of the code blocks and the correspondence between the multiple candidate processing orders and the multiple location relationships may be preset. When determining the processing order of the code blocks in the currently processed code blocks group, the encoder 80 may determine, directly according to the preset correspondence, the processing order corresponding to the code blocks in the currently processed code blocks group, where the multiple candidate processing orders and the correspondence are similar to those in the foregoing embodiment, and details are not described herein again.

Optionally, in an embodiment, the encoding unit is specifically configured to: arrange indexes of the code blocks group according to the first processing order; and encode the arranged indexes of the code blocks group and write the arranged indexes to the bitstream; or arrange coordinates of the code blocks group according to the first processing order; and encode the arranged coordinates of the code blocks group and write the arranged coordinates to the bitstream.

Specifically, after the processing order of the code blocks groups is determined, the processing order may be written to the bitstream by means of indexes or coordinates, or in another manner, so that when a decoder side performs decoding, the decoder side can directly acquire an encoding order of the code blocks groups during encoding. Specifically, there may be the following two manners:

In one manner, index numbers, for example, 0 to N-1, may be allocated to the code blocks groups in the coded image by means of line scan from left to right and from top to bottom. The N index numbers are written to the bitstream according to the optimum processing order obtained by means of calculation.

In the other manner, a horizontal coordinate value and a vertical coordinate value may be allocated to the code blocks group from left to right and from top to bottom. For example, $(x, y)$ indicates a code block. If a coded image has w code blocks groups and h code blocks groups respectively in a horizontal direction and a vertical direction, the coded image has N code blocks groups in total, where $N = w * h$, and value ranges of x and y are respectively $0 \leq x \leq w - 1$ and $0 \leq y \leq h-1$. The N groups of coordinates may be encoded according to the optimum processing order obtained by means of calculation. For example, the N horizontal coordinate values and the N vertical coordinate values may be independently sequentially encoded by using an encoding manner similar to pulse code modulation (Pulse Code Modulation, PCM). Alternatively, the N horizontal coordinate values and the N vertical coordinate values may be encoded by using an encoding manner similar to differential pulse code modulation (Differential Pulse Code Modulation, DPCM).

After an optimum processing order O of the code blocks groups is encoded by using the foregoing method, a result of the encoding is output to a video bitstream, so that the decoder side performs decoding according to the optimum processing order.

Optionally, in an embodiment, a coding cost of the code blocks group includes at least one of the following: a quantity of bits consumed by the encoding unit to encode the code blocks group; or distortion of the code blocks group.

The coding cost of the code blocks group is an important criterion for measuring quality of encoding of the blocks group. When a coding cost is calculated, a quantity of bits consumed to encode the block and quality of the block after reconstruction. A smaller value of the coding cost indicates better encoding of the block.

It should be understood that, when a target image is to be encoded, a first processing order of code blocks groups included in the target image may be determined according to the method in this embodiment of the present invention. When a processing order of code blocks in the code blocks groups is determined, a processing order of code blocks in some code blocks groups may be determined, and a processing order of code blocks in other code blocks groups may be determined according to another technical solution or predetermined.

The encoder 80 in this embodiment of the present invention determines, according to a total coding cost of a target image, a first processing order of multiple code blocks groups included in the target image, and encode the multiple code blocks groups according to the first processing order, so that a spatial correlation in the target image can be fully utilized, thereby improving compression efficiency during encoding.

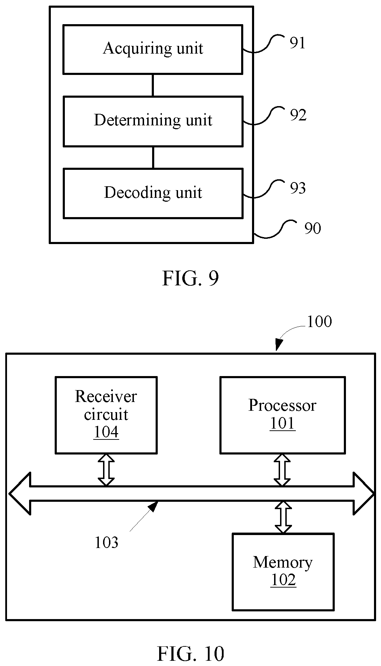

FIG. 9 is a schematic block diagram of a decoder according to an embodiment of the present invention. The decoder 90 in FIG. 9 includes an acquiring unit 91, a determining unit 92, and a decoding unit 93.

The acquiring unit 91 acquires a first processing order of multiple code blocks groups of a target image from a bitstream. The determining unit 92 determines, according to the first processing order, a processing order of multiple code blocks included in a code blocks group of the multiple code blocks groups. The decoding unit 93 decodes the bitstream according to the first processing order and the processing order of the multiple code blocks included in the code blocks group.

A processing order of code blocks included in each code blocks group is determined according to a first processing order that can achieve a minimum total coding cost and that is determined on an encoder side, and the decoder 90 decodes a bitstream of a target image according to the first processing order and the processing order of the code blocks in each code blocks group. In an encoding process, a spatial correlation of the target image is fully utilized, thereby improving compression efficiency during encoding.

The determining unit 92 is further configured to: determine multiple candidate processing orders of the code blocks; and determine a correspondence between the multiple candidate processing orders and multiple location relationships, where the multiple location relationships are multiple relative location relationships between a currently processed code blocks group and a code blocks group that is already processed and that is adjacent to the currently processed code blocks group.

To ensure matching between encoding and decoding, the decoder 90 uses a solution that is the same as a solution used by the encoder side to determine, according to the processing order of the code blocks groups, a processing order of code blocks in a current code blocks group. The code blocks in the current code blocks group have multiple preset candidate processing orders, where each candidate processing order corresponds to one location relationship, and the location relationship is a relative location relationship between a currently processed code blocks group and a code blocks group that is already processed and that is adjacent to the currently processed code blocks group. When the current code blocks group is to be decoded, a relative location relationship between the current code blocks group and a code blocks group that is already decoded and that is adjacent or close to the current code blocks group may be first determined, and then a processing order of code blocks in a corresponding code blocks group is determined in a preconfigured correspondence according to the determined relative location relationship. After the processing order of the code blocks is determined, all code blocks in the current code blocks group are decoded according to the processing order, and after the decoding is finished, a next code blocks group is processed according to the first processing order. Similar to the current code blocks group, a processing order of code blocks in the next code blocks group needs to be determined according to a relative location relationship, and so on, until all code blocks groups of the target image are completely decoded according to the first processing order.

The determining unit is specifically configured to: determine, according to the first processing order, a relative location relationship between the code blocks group and a code blocks group that is already processed and that is adjacent to the code blocks group; and determine, according to the correspondence and the relative location relationship, the processing order of the multiple code blocks included in the code blocks group. The determining unit is specifically configured to use preset multiple candidate processing orders of the code blocks. The preset multiple candidate processing orders of the code blocks may be determined by using multiple methods. For example, the preset multiple candidate processing orders of the code blocks are determined according to a division manner of the code blocks included in the code blocks group. The division manner of the code blocks may include equal-size division, that is, sizes of the code blocks in the code blocks group are equal, for example, in the H.264/AVC. The division manner of the code blocks may further include non-equal-size division, for example, in the HEVC. In a case of equal-size division, the preset multiple candidate processing orders of the code blocks may be shown in FIG. 4. In a case of non-equal-size division, the preset multiple candidate processing orders of the code blocks may be shown in FIG which refers to a non-claimed schemef.

Four processing orders of code blocks shown in FIG. 4 are preset, where an order 0 is progressive scanning from left to right, an order 2 is progressive scanning from right to left, an order 3 is column-by-column scanning from top to bottom, and an order 1 is column-by-column scanning from bottom to top. The relative locations of the code blocks group and the code blocks group that is already decoded are 16 relative locations shown in FIG. 5: 1. There is no code blocks group that is already decoded and that is adjacent to the code blocks group. 2. A code blocks group above the code blocks group has been decoded. 3. A code blocks group on the right of the code blocks group has been decoded. 4. A code blocks group below the code blocks group has been decoded. 5. A code blocks group on the left of the code blocks group has been decoded. 6. Code blocks groups above and on the right of the code blocks group have been decoded. 7. Code blocks groups below and on the right of the code blocks group have been decoded. 8. Code blocks groups on the left of and below the code blocks group have been decoded. 9. Code blocks groups on the left of and above the code blocks group have been decoded. 10. Code blocks groups above and below the code blocks group have been decoded. 11. Code blocks groups on the left and on the right of the code blocks group have been decoded. 12. Code blocks groups above, below, and on the left of the code blocks group have been decoded. 13. Code blocks groups on the left of, on the right of, and above the code blocks group have been decoded. 14. Code blocks groups above, below, and on the right of the code blocks group have been decoded. 15. Code blocks groups on the left of, on the right of, and below the code blocks group have been decoded. 16. Code blocks groups above, below, on the left of, and on the right of the code blocks group have been decoded.

The decoder 90 further preconfigures a correspondence between the foregoing four processing orders and the foregoing 16 relative location relationships. Inter alia, a relative location relationship 1 corresponds to the order 0, a relative location relationship 2 corresponds to the order 3, and a relative location relationship 3 corresponds to the order 2.

It can be learned from the foregoing correspondence that, when a different code blocks group processing order is given, a corresponding case is selected from the foregoing 16 cases for the current code blocks group. A processing order of code blocks in the current code blocks group is subsequently determined, and then a decoding operation is performed on the code blocks in the current code blocks group according to the given code block processing order.

It should be understood that, the foregoing multiple preset modes and correspondences of the decoder 90 may be the same as preset modes and correspondences of the encoder side.

The determining unit is specifically configured to: determine, according to the first processing order, a relative location relationship between the code blocks group and a code blocks group that is already processed and that is adjacent to the code blocks group; and determine, according to the relative location relationship and a correspondence between the preset multiple candidate processing orders and the multiple location relationships, the processing order of the multiple code blocks included in the code blocks group, where the multiple location relationships are multiple relative location relationships between a currently processed code blocks group and a code blocks group that is already processed and that is adjacent to the currently processed code blocks group.

That is, both the multiple candidate processing orders of the code blocks and the correspondence between the multiple candidate processing orders and the multiple location relationships may be preset. When determining the processing order of the code blocks in the currently processed code blocks group, the encoder side may determine, directly according to the preset correspondence, the processing order corresponding to the code blocks in the currently processed code blocks group, where the multiple candidate processing orders and the correspondence are similar to those in the foregoing embodiment, and details are not described herein again.

Optionally, in an embodiment, the acquiring unit 91 is specifically configured to: decode the bitstream to obtain arranged indexes of the multiple code blocks groups; and determine the first processing order according to an arrangement order of the indexes of the multiple code blocks groups; or decode the bitstream to obtain arranged coordinates of the multiple code blocks groups; and determine the first processing order according to an arrangement order of the coordinates of the multiple code blocks groups.

Specifically, after determining the processing order of the code blocks groups, the encoder side may write the processing order to the bitstream by means of indexes or coordinates, or in another manner, so that when the decoder 90 performs decoding, the decoder 90 can directly acquire an encoding order of the code blocks groups during encoding. Specifically, there may be the following two manners:

In one manner, index numbers, for example, 0 to N-1, may be allocated to the code blocks groups in the coded image by means of line scan from left to right and from top to bottom. The N index numbers are written to the bitstream according to the optimum processing order obtained by means of calculation.

In the other manner, a horizontal coordinate value and a vertical coordinate value may be allocated to the code blocks group from left to right and from top to bottom. For example, $(x, y)$ indicates a code block. If a coded image has w code blocks groups and h code blocks groups respectively in a horizontal direction and a vertical direction, the coded image has N code blocks groups in total, where $N = w * h$, and value ranges of x and y are respectively $0 \leq x \leq w - 1$ and $0 \leq y \leq h-1$. The N groups of coordinates may be encoded according to the optimum processing order obtained by means of calculation. For example, the N horizontal coordinate values and the N vertical coordinate values may be independently sequentially encoded by using an encoding manner similar to pulse code modulation (Pulse Code Modulation, PCM). Alternatively, the N horizontal coordinate values and the N vertical coordinate values may be encoded by using an encoding manner similar to differential pulse code modulation (Differential Pulse Code Modulation, DPCM).

That is, correspondingly, the decoder 90 may learn the processing order of the code blocks groups in the foregoing two manners according to information that is written by the encoder side to the bitstream.

In this embodiment of the present invention, a processing order of code blocks included in each code blocks group is determined according to a first processing order that can achieve a minimum total coding cost and that is determined on an encoder side, and the decoder 90 decodes a bitstream of a target image according to the first processing order and the processing order of the code blocks in each code blocks group. In an encoding process, a spatial correlation of the target image is fully utilized, thereby improving compression efficiency during encoding.

FIG. 10 is a schematic block diagram of an encoder according to another embodiment of the present invention. The encoder 100 in FIG. 10 includes a processor 101 and a memory 102. The processor 101 is connected to the memory 102 by using a bus system 103.

The memory 102 is configured to store instructions that make the processor 101 perform the following operations: determining, according to a total coding cost of a target image, a first processing order of multiple code blocks groups included in the target image; encoding a code blocks group of the multiple code blocks groups according to the first processing order, to generate a bitstream; and writing the first processing order to the bitstream.

The encoder 100 in this embodiment of the present invention determines, according to a total coding cost of a target image, a first processing order of multiple code blocks groups included in the target image, and encode the multiple code blocks groups according to the first processing order, so that a spatial correlation in the target image can be fully utilized, thereby improving compression efficiency during encoding.

It should be understood that, the target image in this embodiment of the present invention is a to-be-encoded image, or may be referred to as a coded image. The target image is divided into multiple non-overlapping code blocks groups, where the code blocks group may be equivalent to a coding tree unit CTU in the HEVC, or may be equivalent to a macroblock MB in the H.264/AVC, or the like. The code blocks group may continue to be divided into multiple code blocks for which coding parameters can be independently determined, where the code block may be equivalent to a code unit CU in the HEVC, or may be equivalent to a sub macroblock SMB in the H.264/AVC, or the like.

In addition, the encoder 100 may further include a transmit circuit 104 or the like. The processor 101 controls an operation of the encoder 100, and the processor 101 may be further referred to as a CPU (Central Processing Unit, central processing unit). The memory 102 may include a read-only memory and a random access memory, and provides an instruction and data to the processor 101. A part of the memory 102 may further include a non-volatile random access memory (NVRAM). Components of the encoder 100 are coupled together by using the bus system 103, where the bus system 103 not only includes a data bus, but also may further include a power bus, a control bus, a status signal bus, and the like. However, for clear description, various types of buses in the figure are marked as the bus system 103.

The methods disclosed in the embodiments of the present invention may be applied to the processor 101, or are implemented by the processor 101. The processor 101 may be an integrated circuit chip and has a signal processing capability. In an implementation process, steps of the foregoing methods may be performed by using an integrated logic circuit of hardware in the processor 101 or an instruction in a form of software. The foregoing processor 101 may be a general purpose processor, a digital signal processor (DSP), an application-specific integrated circuit (ASIC), a field programmable gate array (FPGA), or another programmable logic device, discrete gate or transistor logic device, or discrete hardware component. The processor 101 may implement or perform methods, steps and logical block diagrams disclosed in the embodiments of the present invention. The general purpose processor may be a microprocessor or the processor may be any conventional processor and the like. Steps of the methods disclosed with reference to the embodiments of the present invention may be directly performed and completed by means of a hardware decoding processor, or may be performed and completed by using a combination of hardware and software modules in a decoding processor. The software module may be located in a mature storage medium in the art, such as a random access memory, a flash memory, a read-only memory, a programmable read-only memory, an electrically-erasable programmable memory, or a register. The storage medium is located in the memory 102, and the processor 101 reads information in the memory 102 and completes the steps in the foregoing methods in combination with hardware of the processor 101.

The determining, according to a total coding cost of a target image, a first processing order of multiple code blocks groups included in the target image includes: determining a total coding cost corresponding to each processing order of all processing orders of the multiple code blocks groups, where the total coding cost corresponding to each processing order is a sum of coding costs when the multiple code blocks groups are encoded according to each processing order; and determining that a processing order corresponding to a minimum total coding cost of the total coding costs corresponding to all the processing orders is the first processing order.

The encoding a code blocks group of the multiple code blocks groups according to the first processing order, to generate a bitstream includes: determining, according to the first processing order, a processing order of multiple code blocks included in the code blocks group; and encoding the code blocks group according to the first processing order and the processing order of the multiple code blocks included in the code blocks group.

Before the determining, according to the first processing order, a processing order of multiple code blocks included in the code blocks group, the method further includes: determining multiple candidate processing orders of the code blocks; and determining a correspondence between the multiple candidate processing orders and multiple location relationships, where the multiple location relationships are multiple relative location relationships between a currently processed code blocks group and a code blocks group that is already processed and that is adjacent to the currently processed code blocks group.

The determining, according to the first processing order, a processing order of multiple code blocks included in the code blocks group includes: determining, according to the first processing order, a relative location relationship between the code blocks group and a code blocks group that is already processed and that is adjacent to the code blocks group; and determining the processing order of the multiple code blocks included in the code blocks group according to the correspondence and the relative location relationship.

The determining multiple candidate processing orders of the code blocks includes: using preset multiple candidate processing orders of the code blocks.

The determining, according to the first processing order, a processing order of multiple code blocks included in the code blocks group includes: determining, according to the first processing order, a relative location relationship between the code blocks group and a code blocks group that is already processed and that is adjacent to the code blocks group; and determining, according to the relative location relationship and a correspondence between the preset multiple candidate processing orders and the multiple location relationships, the processing order of the multiple code blocks included in the code blocks group, where the multiple location relationships are multiple relative location relationships between a currently processed code blocks group and a code blocks group that is already processed and that is adjacent to the currently processed code blocks group.

The writing the first processing order to the bitstream includes: arranging indexes of the code blocks group according to the first processing order; and encoding the arranged indexes of the code blocks group and writing the arranged indexes to the bitstream; or arranging coordinates of the code blocks group according to the first processing order; and encoding the arranged coordinates of the code blocks group and writing the arranged coordinates to the bitstream.

A coding cost of the code blocks group includes at least one of the following: a quantity of bits consumed to encode the code blocks group; or distortion of the code blocks group.

The encoder 100 in this embodiment of the present invention determines, according to a total coding cost of a target image, a first processing order of multiple code blocks groups included in the target image, and encode the multiple code blocks groups according to the first processing order, so that a spatial correlation in the target image can be fully utilized, thereby improving compression efficiency during encoding.

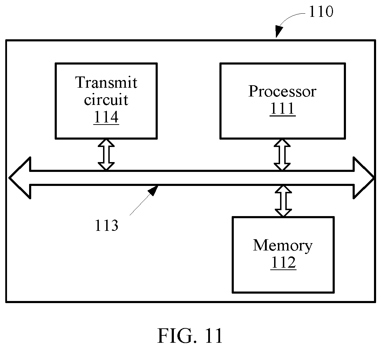

FIG. 11 is a schematic block diagram of a decoder according to another embodiment of the present invention. The decoder 110 in FIG. 11 includes a processor 111 and a memory 112. The processor 111 is connected to the memory 112 by using a bus system 113.

The memory 112 is configured to store instructions that make the processor 111 perform the following operations: acquiring a first processing order of multiple code blocks groups of a target image from a bitstream; determining, according to the first processing order, a processing order of multiple code blocks included in a code blocks group of the multiple code blocks groups; and decoding the bitstream according to the first processing order and the processing order of the multiple code blocks included in the code blocks group.

In this embodiment of the present invention, a processing order of code blocks included in each code blocks group is determined according to a first processing order that can achieve a minimum total coding cost and that is determined on an encoder side, and the decoder 110 decodes a bitstream of a target image according to the first processing order and the processing order of the code blocks in each code blocks group. In an encoding process, a spatial correlation of the target image is fully utilized, thereby improving compression efficiency during encoding.

In addition, the decoder 110 may further include a transmit circuit 114 or the like. The processor 111 controls an operation of the decoder 110, and the processor 111 may be further referred to as a CPU (Central Processing Unit, central processing unit). The memory 112 may include a read-only memory and a random access memory, and provides an instruction and data to the processor 111. A part of the memory 112 may further include a non-volatile random access memory (NVRAM). Components of the decoder 110 are coupled together by using the bus system 113, where the bus system 113 not only includes a data bus, but also may further include a power bus, a control bus, a status signal bus, and the like. However, for clear description, various types of buses in the figure are marked as the bus system 113.

The methods disclosed in the embodiments of the present invention may be applied to the processor 111, or are implemented by the processor 111. The processor 111 may be an integrated circuit chip and has a signal processing capability. In an implementation process, steps of the foregoing methods may be performed by using an integrated logic circuit of hardware in the processor 111 or an instruction in a form of software. The foregoing processor 111 may be a general purpose processor, a digital signal processor (DSP), an application-specific integrated circuit (ASIC), a field programmable gate array (FPGA), or another programmable logic device, discrete gate or transistor logic device, or discrete hardware component. The processor 111 may implement or perform methods, steps and logical block diagrams disclosed in the embodiments of the present invention. The general purpose processor may be a microprocessor or the processor may be any conventional processor and the like. Steps of the methods disclosed with reference to the embodiments of the present invention may be directly performed and completed by means of a hardware decoding processor, or may be performed and completed by using a combination of hardware and software modules in a decoding processor. The software module may be located in a mature storage medium in the art, such as a random access memory, a flash memory, a read-only memory, a programmable read-only memory, an electrically-erasable programmable memory, or a register. The storage medium is located in the memory 112, and the processor 111 reads information in the memory 112 and completes the steps in the foregoing methods in combination with hardware of the processor 111.

Before the determining, according to the first processing order, a processing order of multiple code blocks included in a code blocks group of the multiple code blocks groups, the method further includes: determining multiple candidate processing orders of the code blocks; and determining a correspondence between the multiple candidate processing orders and multiple location relationships, where the multiple location relationships are multiple relative location relationships between a currently processed code blocks group and a code blocks group that is already processed and that is adjacent to the currently processed code blocks group.

The determining, according to the first processing order, a processing order of multiple code blocks included in a code blocks group of the multiple code blocks groups includes: determining, according to the first processing order, a relative location relationship between the code blocks group and a code blocks group that is already processed and that is adjacent to the code blocks group; and determining, according to the correspondence and the relative location relationship, the processing order of the multiple code blocks included in the code blocks group.

The determining multiple candidate processing orders of the code blocks includes: using preset multiple candidate processing orders of the code blocks.

The determining, according to the first processing order, a processing order of multiple code blocks included in the code blocks group includes: determining, according to the first processing order, a relative location relationship between the code blocks group and a code blocks group that is already processed and that is adjacent to the code blocks group; and determining, according to the relative location relationship and a correspondence between the preset multiple candidate processing orders and the multiple location relationships, the processing order of the multiple code blocks included in the code blocks group, where the multiple location relationships are multiple relative location relationships between a currently processed code blocks group and a code blocks group that is already processed and that is adjacent to the currently processed code blocks group.

Optionally, in an embodiment, the acquiring a first processing order of multiple code blocks groups of a target image from a bitstream includes: decoding the bitstream to obtain arranged indexes of the multiple code blocks groups; and determining the first processing order according to an arrangement order of the indexes of the multiple code blocks groups; or decoding the bitstream to obtain arranged coordinates of the multiple code blocks groups; and determining the first processing order according to an arrangement order of the coordinates of the multiple code blocks groups.

In this embodiment of the present invention, a processing order of code blocks included in each code blocks group is determined according to a first processing order that can achieve a minimum total coding cost and that is determined on an encoder side, and the decoder 110 decodes a bitstream of a target image according to the first processing order and the processing order of the code blocks in each code blocks group. In an encoding process, a spatial correlation of the target image is fully utilized, thereby improving compression efficiency during encoding.

A person of ordinary skill in the art may be aware that, in combination with the examples described in the embodiments disclosed in this specification, method steps and units may be implemented by electronic hardware, computer software, or a combination thereof. To clearly describe the interchangeability between the hardware and the software, the foregoing has generally described steps and compositions of each embodiment according to functions. Whether the functions are performed by hardware or software depends on particular applications and design constraint conditions of the technical solutions. A person of ordinary skill in the art may use different methods to implement the described functions for each particular application, but it should not be considered that the implementation goes beyond the scope of the present invention.

Methods or steps described in the embodiments disclosed in this specification may be implemented by hardware, a software program executed by a processor, or a combination thereof. The software program may reside in a random access memory (RAM), a memory, a read-only memory (ROM), an electrically programmable ROM, an electrically erasable programmable ROM, a register, a hard disk, a removable disk, a CD-ROM, or any other form of storage medium known in the art.

The present invention is described in detail with reference to the accompany drawings and in combination with the exemplary embodiments, but the present invention is not limited thereto.

## Claims

1. An encoding method, comprising:

   determining (101), according to a total coding cost of a target image, a first processing order of multiple code blocks groups comprised in the target image, wherein each code blocks group corresponds to a macroblock, MB, in the H.264 advanced video coding, H.264/AVC, standard;
   encoding (102) a currently processed code blocks group of the multiple code blocks groups according to the first processing order, to generate a bitstream; and
   writing (103) the first processing order to the bitstream;
   **characterized in that** the step of encoding (102) the currently processed code blocks group of the multiple code blocks groups according to the first processing order, to generate a bitstream comprises:

      determining, according to the first processing order, a processing order of multiple code blocks comprised in the currently processed code blocks group, where each code block corresponds to a sub macroblock, SMB, in the H.264/AVC standard; and
      encoding the currently processed code blocks group according to the first processing order and the processing order of the multiple code blocks comprised in the currently processed code blocks group,
      further comprising, before the determining (101), according to the first processing order, the processing order of the multiple code blocks comprised in the currently processed code blocks group:

         determining multiple candidate processing orders of the code blocks using preset multiple candidate processing orders of the code blocks, so that four processing orders of code blocks are preset, the preset multiple candidate processing orders of the code blocks are determined according to a division manner of the code blocks included in the code blocks group and the division manner of the code blocks is equal-size division so that sizes of the code blocks in the code blocks group are equal, where an order 0 is progressive scanning from left to right and beginning in an upper left corner of the code blocks, an order 2 is progressive scanning from right to left and beginning in a lower right corner of the code blocks, an order 3 is column-by-column scanning from top to bottom and beginning in an upper right corner of the code blocks, and an order 1 is column-by-column scanning from bottom to top and beginning in a lower left corner of the code blocks; and

determining a correspondence between the multiple candidate processing orders and multiple location relationships, wherein the multiple location relationships are multiple relative location relationships between the currently processed code blocks group and at least one code blocks group that is already processed and that is adjacent to the currently processed code blocks group, so that there are 15 relative locations of the currently processed code blocks group and the at least one code blocks group that is already encoded as follows: 2 a code blocks group above the currently processed code blocks group has been encoded; 3 a code blocks group on the right of the currently processed code blocks group has been encoded; 4 a code blocks group below the currently processed code blocks group has been encoded; 5 a code blocks group on the left of the currently processed code blocks group has been encoded; 6 code blocks groups above and on the right of the currently processed code blocks group have been encoded; 7 code blocks groups below and on the right of the currently processed code blocks group have been encoded; 8 code blocks groups on the left of and below the currently processed code blocks group have been encoded; 9 code blocks groups on the left of and above the currently processed code blocks group have been encoded; 10 code blocks groups above and below the currently processed code blocks group have been encoded; 11 code blocks groups on the left and on the right of the currently processed code blocks group have been encoded; 12 code blocks groups above, below, and on the left of currently processed the code blocks group have been encoded; 13 code blocks groups on the left of, on the right of, and above the currently processed code blocks group have been encoded; 14 code blocks groups above, below, and on the right of the code blocks group have been encoded; 15 code blocks groups on the left of, on the right of, and below the currently processed code blocks group have been encoded; 16 code blocks groups above, below, on the left of, and on the right of the currently processed code blocks group have been encoded,

wherein the determining, according to the first processing order, the processing order of the multiple code blocks comprised in the currently processed code blocks group comprises:

determining, according to the first processing order, the relative location relationship between the currently processed code blocks group and the at least one code blocks group that is already processed and that is adjacent to the currently processed code blocks group; and

determining, according to the relative location relationship and the correspondence between the preset multiple candidate processing orders and the multiple location relationships, the processing order of the multiple code blocks comprised in the currently processed code blocks group, wherein order 0 is determined for relative locations 5, 9, 11, 12 and 16, order 1 is determined for relative locations 4, 8 and 15, order 2 is determined for relative locations 3, 7 and 14 and order 3 is determined for relative locations 2, 6, 10 and 13.

2. The method according to claim 1, wherein the determining (101), according to the total coding cost of the target image, the first processing order of the multiple code blocks groups comprised in the target image comprises:

determining a total coding cost corresponding to each processing order of all processing orders of the multiple code blocks groups, wherein the total coding cost corresponding to each processing order is a sum of coding costs when the multiple code blocks groups are encoded according to each processing order; and

determining that a processing order corresponding to a minimum total coding cost of the total coding costs corresponding to all the processing orders is the first processing order.

3. The method according to claim 1, wherein the writing (103) the first processing order to the bitstream comprises:

arranging indexes of the currently processed code blocks group according to the first processing order; and

encoding the arranged indexes of the currently processed code blocks group and writing the encoded indexes to the bitstream; or

arranging coordinates of the currently processed code blocks group according to the first processing order; and

encoding the arranged coordinates of the currently processed code blocks group and writing the encoded coordinates to the bitstream.

4. The method according to any one of claims 1 to 3, wherein a coding cost of the currently processed code blocks group comprises at least one of the following:

a quantity of bits consumed to encode the currently processed code blocks group; or

distortion of the currently processed code blocks group.

5. A decoding method, comprising:

acquiring (201) a first processing order of multiple code blocks groups of a target image from a bitstream, wherein each code blocks group corresponds to a macroblock, MB, in the H.264 advanced video coding, H.264/AVC, standard;

**characterized by** determining (202), according to the first processing order, a processing order of multiple code blocks comprised in a currently processed code blocks group of the multiple code blocks groups, where each code block corresponds to a sub macroblock, SMB, in the H.264/AVC standard; and

decoding (203) the bitstream according to the first processing order and the processing order of the multiple code blocks comprised in the currently processed code blocks group,

the method further comprises, before the determining (202), according to the first processing order, the processing order of the multiple code blocks comprised in the currently processed code blocks group of the multiple code blocks groups:

determining multiple candidate processing orders of the code blocks using preset multiple candidate processing orders of the code blocks, so that four processing orders of code blocks are preset, the preset multiple candidate processing orders of the code blocks are determined according to a division manner of the code blocks included in the code blocks group and the division manner of the code blocks is equal-size division so that sizes of the code blocks in the code blocks group are equal, where an order 0 is progressive scanning from left to right and beginning in an upper left corner of the code blocks, an order 2 is progressive scanning from right to left and beginning in a lower right corner of the code blocks, an order 3 is column-by-column scanning from top to bottom and beginning in an upper right corner of the code blocks, and an order 1 is column-by-column scanning from bottom to top and beginning in a lower left corner of the code blocks; and determining a correspondence between the multiple candidate processing orders and multiple location relationships, wherein the multiple location relationships are multiple relative location relationships between the currently processed code blocks group and at least one code blocks group that is already processed and that is adjacent to the currently processed code blocks group so that there are 15 relative locations of the currently processed code blocks group and the at least one code blocks group that is already encoded as follows: 2 a code blocks group above the currently processed code blocks group has been encoded; 3 a code blocks group on the right of the currently processed code blocks group has been encoded; 4 a code blocks group below the currently processed code blocks group has been encoded; 5 a code blocks group on the left of the currently processed code blocks group has been encoded; 6 code blocks groups above and on the right of the currently processed code blocks group have been encoded; 7 code blocks groups below and on the right of the currently processed code blocks group have been encoded; 8 code blocks groups on the left of and below the currently processed code blocks group have been encoded; 9 code blocks groups on the left of and above the currently processed code blocks group have been encoded; 10 code blocks groups above and below the currently processed code blocks group have been encoded; 11 code blocks groups on the left and on the right of the currently processed code blocks group have been encoded; 12 code blocks groups above, below, and on the left of currently processed the code blocks group have been encoded; 13 code blocks groups on the left of, on the right of, and above the currently processed code blocks group have been encoded; 14 code blocks groups above, below, and on the right of the code blocks group have been encoded; 15 code blocks groups on the left of, on the right of, and below the currently processed code blocks group have been encoded; 16 code blocks groups above, below, on the left of, and on the right of the currently processed code blocks group have been encoded,

wherein the determining (202), according to the first processing order, the processing order of the multiple code blocks comprised in the currently processed code blocks group comprises:

determining, according to the first processing order, the relative location relationship between the currently processed code blocks group and the at least one code blocks group that is already processed and that is adjacent to the currently processed code blocks group; and

determining, according to the relative location relationship and the correspondence between the preset multiple candidate processing orders and the multiple location relationships, the processing order of the multiple code blocks comprised in the currently processed code blocks group, wherein order 0 is determined for relative locations 5, 9, 11, 12 and 16, order 1 is determined for relative locations 4, 8 and 15, order 2 is determined for relative locations 3, 7 and 14 and order 3 is determined for relative locations 2, 6, 10 and 13.

6. The method according to claim 5, wherein the acquiring (201) the first processing order of the multiple code blocks groups of the target image from the bitstream comprises:

decoding the bitstream to obtain arranged indexes of the multiple code blocks groups; and
determining the first processing order according to an arrangement order of the indexes of the multiple code blocks groups; or
decoding the bitstream to obtain arranged coordinates of the multiple code blocks groups;
and
determining the first processing order according to an arrangement order of the coordinates of the multiple code blocks groups.

7. An encoder (80), comprising:

a determining unit (81), configured to determine, according to a total coding cost of a target image, a first processing order of multiple code blocks groups comprised in the target image, wherein each code blocks group corresponds to a macroblock, MB, in the H.264 advanced video coding, H.264/AVC, standard; and
an encoding unit (82), configured to encode a currently processed code blocks group of the multiple code blocks groups according to the first processing order determined by the determining unit (81), to generate a bitstream, wherein
the encoding unit (82) is further configured to write the first processing order determined by the determining unit (81) to the bitstream;
**characterized in that** the encoding unit (82) is configured to:

determine, according to the first processing order by using the determining unit, a processing order of multiple code blocks comprised in the currently processed code blocks group, where each code block corresponds to a sub macroblock, SMB, in the H.264/AVC standard; and
encode the currently processed code blocks group according to the first processing order and the processing order of the multiple code blocks comprised in the currently processed code blocks group,

wherein the determining unit (81) is further configured to:

determine multiple candidate processing orders of the code blocks using preset multiple candidate processing orders of the code blocks, so that four processing orders of code blocks are preset, the preset multiple candidate processing orders of the code blocks are determined according to a division manner of the code blocks included in the code blocks group and the division manner of the code blocks is equal-size division so that sizes of the code blocks in the code blocks group are equal, where an order 0 is progressive scanning from left to right and beginning in an upper left corner of the code blocks, an order 2 is progressive scanning from right to left and beginning in a lower right corner of the code blocks, an order 3 is column-by-column scanning from top to bottom and beginning in an upper right corner of the code blocks, and an order 1 is column-by-column scanning from bottom to top and beginning in a lower left corner of the code blocks; and determine a correspondence between the multiple candidate processing orders and multiple location relationships, wherein the multiple location relationships are multiple relative location relationships between the currently processed code blocks group and at least one code blocks group that is already processed and that is adjacent to the currently processed code blocks group so that there are 15 relative locations of the currently processed code blocks group and the at least one code blocks group that is already encoded as follows: 2 a code blocks group above the currently processed code blocks group has been encoded; 3 a code blocks group on the right of the currently processed code blocks group has been encoded; 4 a code blocks group below the currently processed code blocks group has been encoded; 5 a code blocks group on the left of the currently processed code blocks group has been encoded; 6 code blocks groups above and on the right of the currently processed code blocks group have been encoded; 7 code blocks groups below and on the right of the currently processed code blocks group have been encoded; 8 code blocks groups on the left of and below the currently processed code blocks group have been encoded; 9 code blocks groups on the left of and above the currently processed code blocks group have been encoded; 10 code blocks groups above and below the currently processed code blocks group have been encoded; 11 code blocks groups on the left and on the right of the currently processed code blocks group have been encoded; 12 code blocks groups above, below, and on the left of currently processed the code blocks group have been encoded; 13 code blocks groups on the left of, on the right of, and above the currently processed code blocks group have been encoded; 14 code blocks groups above, below, and on the right of the code blocks group have been encoded; 15 code blocks groups on the left of, on the right of, and below the currently processed code blocks group have been encoded; 16 code blocks groups above, below, on the left of, and on the right of the currently processed code blocks group have been encoded,

wherein the determining unit (81) is further configured to:

determine, according to the first processing order, the relative location relationship between the currently processed code blocks group and the at least one code blocks group that is already processed and that is adjacent to the code blocks group; and

determine, according to the relative location relationship and the correspondence between the preset multiple candidate processing orders and the multiple location relationships, the processing order of the multiple code blocks comprised in the currently processed code blocks group, wherein order 0 is determined for relative locations 5, 9, 11, 12 and 16, order 1 is determined for relative locations 4, 8 and 15, order 2 is determined for relative locations 3, 7 and 14 and order 3 is determined for relative locations 2, 6, 10 and 13.

8. The encoder according to claim 7, wherein the determining unit (81) is configured to:

determine the total coding cost corresponding to each processing order of all processing orders of the multiple code blocks groups, wherein the total coding cost corresponding to each processing order is a sum of coding costs when the multiple code blocks groups are encoded according to each processing order; and

determine that a processing order corresponding to a minimum total coding cost of the total coding costs corresponding to all the processing orders is the first processing order.

9. The encoder according to claim 7, wherein the encoding unit (82) is configured to:

arrange indexes of the currently processed code blocks group according to the first processing order; and encode the arranged indexes of the currently processed code blocks group and write the encoded indexes to the bitstream; or

arrange coordinates of the currently processed code blocks group according to the first processing order; and encode the arranged coordinates of the currently processed code blocks group and write the encoded coordinates to the bitstream.

10. The encoder according to any one of claims 7 to 9, wherein the coding cost of the code blocks group comprises at least one of the following:

a quantity of bits consumed by the encoding unit (82) to encode the currently processed code blocks group; or distortion of the currently processed code blocks group.

11. A decoder (90), comprising:

an acquiring unit (91), configured to acquire a first processing order of multiple code blocks groups of a target image from a bitstream, wherein each code blocks group corresponds to a macroblock, MB, in the H.264 advanced video coding, H.264/AVC, standard;

**characterized by** a determining unit (92), configured to determine, according to the first processing order, a processing order of multiple code blocks comprised in a currently processed code blocks group of the multiple code blocks groups, where each code block corresponds to a sub macroblock, SMB, in the H.264/AVC standard; and

a decoding unit (93), configured to decode the bitstream according to the first processing order and the processing order of the multiple code blocks comprised in the currently processed code blocks group, wherein the determining unit (92) is further configured to:

determine multiple candidate processing orders of the code blocks using preset multiple candidate processing orders of the code blocks, so that four processing orders of code blocks are preset, the preset multiple candidate processing orders of the code blocks are determined according to a division manner of the code blocks included in the code blocks group and the division manner of the code blocks is equal-size division so that sizes of the code blocks in the code blocks group are equal, where an order 0 is progressive scanning from left to right and beginning in an upper left corner of the code blocks, an order 2 is progressive scanning from right to left and beginning in a lower right corner of the code blocks, an order 3 is column-by-column scanning from top to bottom and beginning in an upper right corner of the code blocks, and an order 1 is column-by-column scanning from bottom to top and beginning in a lower left corner of the code blocks; and determine a correspondence between the multiple candidate processing orders and multiple location relationships, wherein the multiple location relationships are multiple relative location relationships between the currently processed currently processed code blocks group and at least one code blocks group that is already processed and that is adjacent to the currently processed code blocks group so that there are 15 relative locations of the currently processed code blocks group and the at least one code blocks group that is already encoded as follows: 2 a code blocks group above the currently processed code blocks group has been encoded; 3 a code blocks group on the right of the currently processed code blocks group has been encoded; 4 a code blocks group below the currently processed code blocks group has been encoded; 5 a code blocks group on the left of the currently processed code blocks group has been encoded; 6 code blocks groups above and on the right of the currently processed code blocks group have been encoded; 7 code blocks groups below and on the right of the currently processed code blocks group have been encoded; 8 code blocks groups on the left of and below the currently processed code blocks group have been encoded; 9 code blocks groups on the left of and above the currently processed code blocks group have been encoded; 10 code blocks groups above and below the currently processed code blocks group have been encoded; 11 code blocks groups on the left and on the right of the currently processed code blocks group have been encoded; 12 code blocks groups above, below, and on the left of currently processed the code blocks group have been encoded; 13 code blocks groups on the left of, on the right of, and above the currently processed code blocks group have been encoded; 14 code blocks groups above, below, and on the right of the code blocks group have been encoded; 15 code blocks groups on the left of, on the right of, and below the currently processed code blocks group have been encoded; 16 code blocks groups above, below, on the left of, and on the right of the currently processed code blocks group have been encoded, wherein the determining unit (92) is further configured to:

determine, according to the first processing order, the relative location relationship between the currently processed code blocks group and the at least one code blocks group that is already processed and that is adjacent to the currently processed code blocks group; and
determine, according to the relative location relationship and the correspondence between the preset multiple candidate processing orders and the multiple location relationships, the processing order of the multiple code blocks comprised in the currently processed code blocks group, wherein order 0 is determined for relative locations 5, 9, 11, 12 and 16, order 1 is determined for relative locations 4, 8 and 15, order 2 is determined for relative locations 3, 7 and 14 and order 3 is determined for relative locations 2, 6, 10 and 13.

12. The decoder according to claim 11, wherein the acquiring unit (91) is configured to:

use the decoding unit (93) to decode the bitstream to obtain arranged indexes of the multiple code blocks groups; and
use the determining unit (92) to determine the first processing order according to an arrangement order of the indexes of the multiple code blocks groups; or
use the decoding unit (91) to decode the bitstream to obtain arranged coordinates of the multiple code blocks groups; and
use the determining unit (92) to determine the first processing order according to an arrangement order of the coordinates of the multiple code blocks groups.

13. A computer program comprising instructions which, when the program is executed by a computer, cause the computer to carry out the method of any one of claims 1 to 4.

14. A computer program comprising instructions which, when the program is executed by a computer, cause the computer to carry out the method of claim 5 or 6.

**Patentansprüche**

1. Codierungsverfahren, umfassend:

Bestimmen (101), gemäß Gesamtcodierungskosten eines Zielbildes, einer ersten Verarbeitungsreihenfolge mehrerer Codeblockgruppen, die in dem Zielbild umfasst sind, wobei jede Codeblockgruppe einem Makroblock, MB, in dem Standard H.264 Advanced Video Coding, H.264/AVC, entspricht;

Codieren (102) einer aktuell verarbeiteten Codeblockgruppe der mehreren Codeblockgruppen gemäß der ersten Verarbeitungsreihenfolge, um einen Bitstrom zu erzeugen; und

Schreiben (103) der ersten Verarbeitungsreihenfolge in den Bitstrom;

**dadurch gekennzeichnet, dass** der Schritt des Codierens (102) der aktuell verarbeiteten Codeblockgruppe der mehreren Codeblockgruppen gemäß der ersten Verarbeitungsreihenfolge, um einen Bitstrom zu erzeugen, Folgendes umfasst:

Bestimmen, gemäß der ersten Verarbeitungsreihenfolge, einer Verarbeitungsreihenfolge mehrerer Codeblöcke, die in der aktuell verarbeiteten Codeblockgruppe umfasst sind, wobei jeder Codeblock einem Submakroblock, SMB, in dem Standard H.264/AVC entspricht; und

Codieren der aktuell verarbeiteten Codeblockgruppe gemäß der ersten Verarbeitungsreihenfolge und der Verarbeitungsreihenfolge der mehreren Codeblöcke, die in der aktuell verarbeiteten Codeblockgruppe umfasst sind,

ferner umfassend, vor dem Bestimmen (101), gemäß der ersten Verarbeitungsreihenfolge, der Verarbeitungsreihenfolge der mehreren Codeblöcke, die in der aktuell verarbeiteten Codeblockgruppe umfasst sind:

Bestimmen mehrerer Kandidatenverarbeitungsreihenfolgen der Codeblöcke unter Verwendung voreingestellter mehrerer Kandidatenverarbeitungsreihenfolgen der Codeblöcke, so dass vier Verarbeitungsreihenfolgen von Codeblöcken voreingestellt sind, die voreingestellten mehreren Kandidatenverarbeitungsreihenfolgen der Codeblöcke gemäß einer Aufteilungsweise der in der Codeblockgruppe beinhalteten Codeblöcke bestimmt werden und die Aufteilungsweise der Codeblöcke eine gleichgroße Aufteilung ist, so dass die Größen der Codeblöcke in der Codeblockgruppe gleich sind, wobei eine Reihenfolge 0 ein progressives Abtasten von links nach rechts und beginnend in einer oberen linken Ecke der Codeblöcke ist, eine Reihenfolge 2 ein progressives Abtasten von rechts nach links und beginnend in einer unteren rechten Ecke der Codeblöcke ist, eine Reihenfolge 3 ein spaltenweises Abtasten von oben nach unten und beginnend in einer oberen rechten Ecke der Codeblöcke ist und eine Reihenfolge 1 ein spaltenweises Abtasten von unten nach oben und beginnend in einer unteren linken Ecke der Codeblöcke ist; und

Bestimmen einer Entsprechung zwischen den mehreren Kandidatenverarbeitungsreihenfolgen und den mehreren Standortbeziehungen, wobei die mehreren Standortbeziehungen mehrere relative Standortbeziehungen zwischen der aktuell verarbeiteten Codeblockgruppe und mindestens einer Codeblockgruppe sind, die bereits verarbeitet wird und die benachbart zu der aktuell verarbeiteten Codeblockgruppe ist, so dass es 15 relative Standorte der aktuell verarbeiteten Codeblockgruppe und der mindestens einen Codeblockgruppe gibt, die bereits wie folgt codiert ist: 2 eine Codeblockgruppe oberhalb von der aktuell verarbeiteten Codeblockgruppe wurde codiert; 3 eine Codeblockgruppe rechts von der aktuell verarbeiteten Codeblockgruppe wurde codiert; 4 eine Codeblockgruppe unterhalb von der aktuell verarbeiteten Codeblockgruppe wurde codiert; 5 eine Codeblockgruppe links von der aktuell verarbeiteten Codeblockgruppe wurde codiert; 6 Codeblockgruppen oberhalb und rechts von der aktuell verarbeiteten Codeblockgruppe wurden codiert; 7 Codeblockgruppen unterhalb und rechts von der aktuell verarbeiteten Codeblockgruppe wurden codiert; 8 Codeblockgruppen links und unterhalb von der aktuell verarbeiteten Codeblockgruppe wurden codiert; 9 Codeblockgruppen links und oberhalb von der aktuell verarbeiteten Codeblockgruppe wurden codiert; 10 Codeblockgruppen oberhalb und unterhalb von der aktuell verarbeiteten Codeblockgruppe wurden codiert; 11 Codeblockgruppen links und rechts von der aktuell verarbeiteten Codeblockgruppe wurden codiert; 12 Codeblockgruppen oberhalb, unterhalb und links von der aktuell verarbeiteten Codeblockgruppe wurden codiert; 13 Codeblockgruppen links, rechts und oberhalb von der aktuell verarbeiteten Codeblockgruppe wurden codiert; 14 Codeblockgruppen oberhalb, unterhalb und rechts von der Codeblockgruppe wurden codiert; 15 Codeblockgruppen links, rechts und unterhalb von der aktuell verarbeiteten Codeblockgruppe wurden codiert; 16 Codeblockgruppen oberhalb, unterhalb, links und rechts von der aktuell verarbeiteten Codeblockgruppe wurden codiert,

wobei das Bestimmen, gemäß der ersten Verarbeitungsreihenfolge, der Verarbeitungsreihenfolge der mehreren Codeblöcke, die in der aktuell verarbeiteten Codeblockgruppe umfasst sind, Folgendes umfasst:

Bestimmen, gemäß der ersten Verarbeitungsreihenfolge, der relativen Standortbeziehung zwischen der aktuell verarbeiteten Codeblockgruppe und der mindestens einen Codeblockgruppe, die bereits verarbeitet wird und die benachbart zu der aktuell verarbeiteten Codeblockgruppe ist; und Bestimmen, gemäß der relativen Standortbeziehung und der Entsprechung zwischen den voreingestellten mehreren Kandidatenverarbeitungsreihenfolgen und den mehreren Standortbeziehungen, der Verarbeitungsreihenfolge der mehreren Codeblöcke, die in der aktuell verarbeiteten Codeblockgruppe umfasst sind,

wobei die Reihenfolge 0 für die relativen Standorte 5, 9, 11, 12 und 16 bestimmt wird, die Reihenfolge 1 für die relativen Standorte 4, 8 und 15 bestimmt wird, die Reihenfolge 2 für die relativen Standorte 3, 7 und 14 bestimmt wird und die Reihenfolge 3 für die relativen Standorte 2, 6, 10 und 13 bestimmt wird.

2. Verfahren nach Anspruch 1, wobei das Bestimmen (101), gemäß den Gesamtcodierungskosten des Zielbildes, der ersten Verarbeitungsreihenfolge der mehreren Codeblockgruppen, die in dem Zielbild umfasst sind, Folgendes umfasst:

Bestimmen von Gesamtcodierungskosten, die jeder Verarbeitungsreihenfolge sämtlicher Verarbeitungsreihenfolgen der mehreren Codeblockgruppen entsprechen, wobei die Gesamtcodierungskosten, die jeder Verarbeitungsreihenfolge entsprechen, eine Summe der Codierungskosten sind, wenn die mehreren Codeblockgruppen gemäß jeder Verarbeitungsreihenfolge codiert werden; und

Bestimmen, dass eine Verarbeitungsreihenfolge, die den minimalen Gesamtcodierungskosten der Gesamtcodierungskosten sämtlicher Verarbeitungsreihenfolgen entspricht, die erste Verarbeitungsreihenfolge ist.

3. Verfahren nach Anspruch 1, wobei das Schreiben (103) der ersten Verarbeitungsreihenfolge in den Bitstrom Folgendes umfasst:

Anordnen von Indizes der aktuell verarbeiteten Codeblockgruppe gemäß der ersten Verarbeitungsreihenfolge; und

Codieren der angeordneten Indizes der aktuell verarbeiteten Codeblockgruppe und Schreiben der codierten Indizes in den Bitstrom; oder

Anordnen von Koordinaten der aktuell verarbeiteten Codeblockgruppe gemäß der ersten Verarbeitungsreihenfolge; und Codieren der angeordneten Koordinaten der aktuell verarbeiteten Codeblockgruppe und Schreiben der codierten Koordinaten in den Bitstrom.

4. Verfahren nach einem der Ansprüche 1 bis 3, wobei die Codierungskosten der aktuell verarbeiteten Codeblockgruppe mindestens eines der Folgenden umfassen:

eine Anzahl von Bits, die verbraucht werden, um die aktuell verarbeitete Codeblockgruppe zu codieren; oder Verzerrung der aktuell verarbeiteten Codeblockgruppe.

5. Decodierungsverfahren, umfassend:

Erfassen (201) einer ersten Verarbeitungsreihenfolge mehrerer Codeblockgruppen eines Zielbildes aus einem Bitstrom, wobei jede Codeblockgruppe einem Makroblock, MB, in dem Standard H.264 Advanced Video Coding, H.264/AVC, entspricht;

**gekennzeichnet durch** Bestimmen (202), gemäß der ersten Verarbeitungsreihenfolge, einer Verarbeitungsreihenfolge mehrerer Codeblöcke, die in der aktuell verarbeiteten Codeblockgruppe umfasst sind, wobei jeder Codeblock einem Submakroblock, SMB, in dem Standard H.264/AVC entspricht; und

Decodieren (203) des Bitstroms gemäß der ersten Verarbeitungsreihenfolge und der Verarbeitungsreihenfolge der mehreren Codeblöcke, die in der aktuell verarbeiteten Codeblockgruppe umfasst sind,

wobei das Verfahren ferner vor dem Bestimmen (202) der Verarbeitungsreihenfolge der mehreren Codeblöcke, die in der aktuell verarbeiteten Codeblockgruppe der mehreren Codeblockgruppen umfasst sind, gemäß der ersten Verarbeitungsreihenfolge Folgendes umfasst:

Bestimmen mehrerer Kandidatenverarbeitungsreihenfolgen der Codeblöcke unter Verwendung voreingestellter mehrerer Kandidatenverarbeitungsreihenfolgen der Codeblöcke, so dass vier Verarbeitungsreihenfolgen von Codeblöcken voreingestellt sind, die voreingestellten mehreren Kandidatenverarbeitungsreihenfolgen der Codeblöcke gemäß einer Aufteilungsweise der in der Codeblockgruppe beinhalteten Codeblöcke bestimmt werden und die Aufteilungsweise der Codeblöcke eine gleichgroße Aufteilung ist, so dass die Größen der Codeblöcke in der Codeblockgruppe gleich sind, wobei eine Reihenfolge 0 ein progressives Abtasten von links nach rechts und beginnend in einer oberen linken Ecke der Codeblöcke ist, eine Reihenfolge 2 ein progressives Abtasten von rechts nach links und beginnend in einer unteren rechten Ecke der Codeblöcke ist, eine Reihenfolge 3 ein spaltenweises Abtasten von oben nach unten und beginnend in einer oberen rechten Ecke der Codeblöcke ist und eine Reihenfolge 1 ein spaltenweises Abtasten von unten nach oben und beginnend in einer unteren linken Ecke der Codeblöcke ist; und Bestimmen einer Entsprechung zwischen den mehreren Kandidatenverarbeitungsreihenfolgen und den mehreren Standortbeziehungen, wobei die mehreren Standortbeziehungen mehrere relative Standortbeziehungen zwischen der aktuell verarbeiteten Codeblockgruppe und mindestens einer Codeblockgruppe sind, die bereits verarbeitet wird und die benachbart zu der aktuell verarbeiteten Codeblockgruppe ist, so dass es 15 relative Standorte der aktuell verarbeiteten Codeblockgruppe und der mindestens einen Codeblockgruppe gibt, die bereits wie folgt codiert ist: 2 eine Codeblockgruppe oberhalb von der aktuell verarbeiteten Codeblockgruppe wurde codiert; 3 eine Codeblockgruppe rechts von der aktuell verarbeiteten Codeblockgruppe wurde codiert; 4 eine Codeblockgruppe unterhalb von der aktuell verarbeiteten Code-lockgruppe wurde codiert; 5 eine Codeblockgruppe links von der aktuell verarbeiteten Codeblockgruppe wurde codiert; 6 Codeblockgruppen oberhalb und rechts von der aktuell verarbeiteten Codeblockgruppe wurden codiert; 7 Codeblockgruppen unterhalb und rechts von der aktuell verarbeiteten Codeblockgruppe wurden codiert; 8 Codeblockgruppen links und unterhalb von der aktuell verarbeiteten Codeblockgruppe wurden codiert; 9 Codeblockgruppen links und oberhalb von der aktuell verarbeiteten Codeblockgruppe wurden codiert; 10 Codeblockgruppen oberhalb und unterhalb von der aktuell verarbeiteten Codeblockgruppe wurden codiert; 11 Codeblockgruppen links und rechts von der aktuell verarbeiteten Codeblockgruppe wurden codiert; 12 Codeblockgruppen oberhalb, unterhalb und links von der aktuell verarbeiteten Codeblockgruppe wurden codiert; 13 Codeblockgruppen links, rechts und oberhalb von der aktuell verarbeiteten Codeblockgruppe wurden codiert; 14 Codeblockgruppen oberhalb, unterhalb und rechts von der Codeblockgruppe wurden codiert; 15 Codeblockgruppen links, rechts und unterhalb von der aktuell verarbeiteten Codeblockgruppe wurden codiert; 16 Codeblockgruppen oberhalb, unterhalb, links und rechts von der aktuell verarbeiteten Codeblockgruppe wurden codiert, wobei das Bestimmen (202), gemäß der ersten Verarbeitungsreihenfolge, der Verarbeitungsreihenfolge der mehreren Codeblöcke, die in der aktuell verarbeiteten Codeblockgruppe umfasst sind, Folgendes umfasst:

Bestimmen, gemäß der ersten Verarbeitungsreihenfolge, der relativen Standortbeziehung zwischen der aktuell verarbeiteten Codeblockgruppe und der mindestens einen Codeblockgruppe, die bereits verarbeitet wird und die benachbart zu der aktuell verarbeiteten Codeblockgruppe ist; und Bestimmen, gemäß der relativen Standortbeziehung und der Entsprechung zwischen den voreingestellten mehreren Kandidatenverarbeitungsreihenfolgen und den mehreren Standortbeziehungen, der Verarbeitungsreihenfolge der mehreren Codeblöcke, die in der aktuell verarbeiteten Codeblockgruppe umfasst sind, wobei Reihenfolge 0 für die relativen Standorte 5, 9, 11, 12 und 16 bestimmt wird, Reihenfolge 1 für die relativen Standorte 4, 8 und 15 bestimmt wird, Reihenfolge 2 für die relativen Standorte 3, 7 und 14 bestimmt wird und Reihenfolge 3 für die relativen Standorte 2, 6, 10 und 13 bestimmt wird.

6. Verfahren nach Anspruch 5, wobei das Erfassen (201) der ersten Verarbeitungsreihenfolge der mehreren Codeblockgruppen des Zielbildes aus dem Bitstrom Folgendes umfasst:

Decodieren des Bitstroms, um angeordnete Indizes der mehreren Codeblockgruppen zu erlangen; und Bestimmen der ersten Verarbeitungsreihenfolge gemäß einer Anordnungsreihenfolge der Indizes der mehreren Codeblockgruppen; oder Decodieren des Bitstroms, um angeordnete Koordinaten der mehreren Codeblockgruppen zu erlangen; und Bestimmen der ersten Verarbeitungsreihenfolge gemäß einer Anordnungsreihenfolge der Koordinaten der mehreren Codeblockgruppen.

7. Codierer (80), umfassend:

eine Bestimmungseinheit (81), die dazu konfiguriert ist, gemäß Gesamtcodierungskosten eines Zielbildes, eine erste Verarbeitungsreihenfolge mehrerer Codeblockgruppen zu bestimmen, die in dem Zielbild umfasst sind, wobei jede Codeblockgruppe einem Makroblock, MB, in dem Standard H.264 Advanced Video Coding, H.264/AVC, entspricht; und eine Codiereinheit (82), die dazu konfiguriert ist, eine aktuell verarbeitete Codeblockgruppe der mehreren Codeblockgruppen gemäß der erste Verarbeitungsreihenfolge zu codieren, die durch die Bestimmungseinheit (81) bestimmt wird, um einen Bitstrom zu erzeugen, wobei
die Codiereinheit (82) ferner dazu konfiguriert ist, die erste Verarbeitungsreihenfolge, die durch die Bestimmungseinheit (81) bestimmt wird, in den Bitstrom zu schreiben;
**dadurch gekennzeichnet, dass** die Codiereinheit (82) zu Folgendem konfiguriert ist:

Bestimmen, gemäß der ersten Verarbeitungsreihenfolge durch Verwenden der Bestimmungseinheit, einer Verarbeitungsreihenfolge mehrerer Codeblöcke, die in der aktuell verarbeiteten Codeblockgruppe umfasst sind, wobei jeder Codeblock einem Submakroblock, SMB, in dem Standard H.264/AVC entspricht; und
Codieren der aktuell verarbeiteten Codeblockgruppe gemäß der ersten Verarbeitungsreihenfolge und der Verarbeitungsreihenfolge der mehreren Codeblöcke, die in der aktuell verarbeiteten Codeblockgruppe umfasst sind,
wobei die Bestimmungseinheit (81) ferner zu Folgendem konfiguriert ist:

Bestimmen mehrerer Kandidatenverarbeitungsreihenfolgen der Codeblöcke unter Verwendung voreingestellter mehrerer Kandidatenverarbeitungsreihenfolgen der Codeblöcke, so dass vier Verarbeitungsreihenfolgen von Codeblöcken voreingestellt sind, die voreingestellten mehreren Kandidatenverarbeitungsreihenfolgen der Codeblöcke gemäß einer Aufteilungsweise der in der Codeblockgruppe beinhalteten Codeblöcke bestimmt werden und die Aufteilungsweise der Codeblöcke eine gleichgroße Aufteilung ist, so dass die Größen der Codeblöcke in der Codeblockgruppe gleich sind, wobei eine Reihenfolge 0 ein progressives Abtasten von links nach rechts und beginnend in einer oberen linken Ecke der Codeblöcke ist, eine Reihenfolge 2 ein progressives Abtasten von rechts nach links und beginnend in einer unteren rechten Ecke der Codeblöcke ist, eine Reihenfolge 3 ein spaltenweises Abtasten von oben nach unten und beginnend in einer oberen rechten Ecke der Codeblöcke ist und eine Reihenfolge 1 ein spaltenweises Abtasten von unten nach oben und beginnend in einer unteren linken Ecke der Codeblöcke ist; und
Bestimmen einer Entsprechung zwischen den mehreren Kandidatenverarbeitungsreihenfolgen und den mehreren Standortbeziehungen, wobei die mehreren Standortbeziehungen mehrere relative Standortbeziehungen zwischen der aktuell verarbeiteten Codeblockgruppe und mindestens einer Codeblockgruppe sind, die bereits verarbeitet wird und die benachbart zu der aktuell verarbeiteten Codeblockgruppe ist, so dass es 15 relative Standorte der aktuell verarbeiteten Codeblockgruppe und der mindestens einen Codeblockgruppe gibt, die bereits wie folgt codiert ist: 2 eine Codeblockgruppe oberhalb von der aktuell verarbeiteten Codeblockgruppe wurde codiert; 3 eine Codeblockgruppe rechts von der aktuell verarbeiteten Codeblockgruppe wurde codiert; 4 eine Codeblockgruppe unterhalb von der aktuell verarbeiteten Codeblockgruppe wurde codiert; 5 eine Codeblockgruppe links von der aktuell verarbeiteten Codeblockgruppe wurde codiert; 6 Codeblockgruppen oberhalb und rechts von der aktuell verarbeiteten Codeblockgruppe wurden codiert; 7 Codeblockgruppen unterhalb und rechts von der aktuell verarbeiteten Codeblockgruppe wurden codiert; 8 Codeblockgruppen links und unterhalb von der aktuell verarbeiteten Codeblockgruppe wurden codiert; 9 Codeblockgruppen links und oberhalb von der aktuell verarbeiteten Codeblockgruppe wurden codiert; 10 Codeblockgruppen oberhalb und unterhalb von der aktuell verarbeiteten Codeblockgruppe wurden codiert; 11 Codeblockgruppen links und rechts von der aktuell verarbeiteten Codeblockgruppe wurden codiert; 12 Codeblockgruppen oberhalb, unterhalb und links von der aktuell verarbeiteten Codeblockgruppe wurden codiert; 13 Codeblockgruppen links, rechts und oberhalb von der aktuell verarbeiteten Codeblockgruppe wurden codiert; 14 Codeblockgruppen oberhalb, unterhalb und rechts von der Codeblockgruppe wurden codiert; 15 Codeblockgruppen links, rechts und unterhalb von der aktuell verarbeiteten Codeblockgruppe wurden codiert; 16 Codeblockgruppen oberhalb, unterhalb, links und rechts von der aktuell verarbeiteten Codeblockgruppe wurden codiert,
wobei die Bestimmungseinheit (81) ferner zu Folgendem konfiguriert ist:

Bestimmen, gemäß der ersten Verarbeitungsreihenfolge, der relativen Standortbeziehung zwischen der aktuell verarbeiteten Codeblockgruppe und der mindestens einen Codeblockgruppe, die bereits verarbeitet wird und die benachbart zu der Codeblockgruppe ist; und
Bestimmen, gemäß der relativen Standortbeziehung und der Entsprechung zwischen den voreingestellten mehreren Kandidatenverarbeitungsreihenfolgen und den mehreren Standortbeziehungen, der Verarbeitungsreihenfolge der mehreren Codeblöcke, die in der aktuell verarbeiteten Codeblockgruppe umfasst sind, wobei Reihenfolge 0 für die relativen Standorte 5, 9, 11, 12 und 16 bestimmt wird, Reihenfolge 1 für die relativen Standorte 4, 8 und 15 bestimmt wird, Reihenfolge 2 für die relativen Standorte 3, 7 und 14 bestimmt wird und Reihenfolge 3 für die relativen Standorte 2, 6, 10 und 13 bestimmt wird.

8. Codierer nach Anspruch 7, wobei die Bestimmungseinheit (81) zu Folgendem konfiguriert ist:

Bestimmen der Gesamtcodierungskosten, die jeder Verarbeitungsreihenfolge sämtlicher Verarbeitungsreihenfolgen der mehreren Codeblockgruppen entsprechen, wobei die Gesamtcodierungskosten, die jeder Verarbeitungsreihenfolge entsprechen, eine Summe der Codierungskosten sind, wenn die mehreren Codeblockgruppen gemäß jeder Verarbeitungsreihenfolge codiert werden; und

Bestimmen, dass eine Verarbeitungsreihenfolge, die den minimalen Gesamtcodierungskosten der Gesamtcodierungskosten sämtlicher Verarbeitungsreihenfolgen entspricht, die erste Verarbeitungsreihenfolge ist.

9. Codierer nach Anspruch 7, wobei die Codiereinheit (82) zu Folgendem konfiguriert ist:

Anordnen von Indizes der aktuell verarbeiteten Codeblockgruppe gemäß der ersten Verarbeitungsreihenfolge; und

Codieren der angeordneten Indizes der aktuell verarbeiteten Codeblockgruppe und Schreiben der codierten Indizes in den Bitstrom; oder

Anordnen von Koordinaten der aktuell verarbeiteten Codeblockgruppe gemäß der ersten Verarbeitungsreihenfolge; und

Codieren der angeordneten Koordinaten der aktuell verarbeiteten Codeblockgruppe und Schreiben der codierten Koordinaten in den Bitstrom.

10. Codierer nach einem der Ansprüche 7 bis 9, wobei die Codierungskosten der Codeblockgruppe mindestens eines der Folgenden umfassen:

eine Anzahl von Bits, die durch die Codiereinheit (82) verbraucht werden, um die aktuell verarbeitete Codeblockgruppe zu codieren; oder

Verzerrung der aktuell verarbeiteten Codeblockgruppe.

11. Decodierer (90), umfassend:

eine Erfassungseinheit (91), die dazu konfiguriert ist, eine erste Verarbeitungsreihenfolge mehrerer Codeblockgruppen eines Zielbildes aus einem Bitstrom zu erfassen, wobei jede Codeblockgruppe einem Makroblock, MB, in dem Standard H.264 Advanced Video Coding, H.264/AVC, entspricht;

**gekennzeichnet durch** eine Bestimmungseinheit (92), die dazu konfiguriert ist, gemäß der ersten Verarbeitungsreihenfolge, eine Verarbeitungsreihenfolge mehrerer Codeblöcke zu bestimmen, die in der aktuell verarbeiteten Codeblockgruppe umfasst sind, wobei jeder Codeblock einem Submakroblock, SMB, in dem Standard H.264/AVC entspricht; und

eine Decodiereinheit (93), die dazu konfiguriert ist, den Bitstrom gemäß der ersten Verarbeitungsreihenfolge und der Verarbeitungsreihenfolge der mehreren Codeblöcke zu decodieren, die in der aktuell verarbeiteten Codeblockgruppe umfasst sind,

wobei die Bestimmungseinheit (92) ferner zu Folgendem konfiguriert ist:

Bestimmen mehrerer Kandidatenverarbeitungsreihenfolgen der Codeblöcke unter Verwendung voreingestellter mehrerer Kandidatenverarbeitungsreihenfolgen der Codeblöcke, so dass vier Verarbeitungsreihenfolgen von Codeblöcken voreingestellt sind, die voreingestellten mehreren Kandidatenverarbeitungsreihenfolgen der Codeblöcke gemäß einer Aufteilungsweise der in der Codeblockgruppe beinhalteten Codeblöcke bestimmt werden und die Aufteilungsweise der Codeblöcke eine gleichgroße Aufteilung ist, so dass die Größen der Codeblöcke in der Codeblockgruppe gleich sind, wobei eine Reihenfolge 0 ein progressives Abtasten von links nach rechts und beginnend in einer oberen linken Ecke der Codeblöcke ist, eine Reihenfolge 2 ein progressives Abtasten von rechts nach links und beginnend in einer unteren rechten Ecke der Codeblöcke ist, eine Reihenfolge 3 ein spaltenweises Abtasten von oben nach unten und beginnend in einer oberen rechten Ecke der Codeblöcke ist und eine Reihenfolge 1 ein spaltenweises Abtasten von unten nach oben und beginnend in einer unteren linken Ecke der Codeblöcke ist; und

Bestimmen einer Entsprechung zwischen den mehreren Kandidatenverarbeitungsreihenfolgen und den mehreren Standortbeziehungen, wobei die mehreren Standortbeziehungen mehrere relative Standortbeziehungen zwischen der aktuell verarbeiteten Codeblockgruppe und mindestens einer Codeblockgruppe sind, die bereits verarbeitet wird und die benachbart zu der aktuell verarbeiteten Codeblockgruppe ist, so dass es 15 relative Standorte der aktuell verarbeiteten Codeblockgruppe und der mindestens einen Codeblockgruppe gibt, die bereits wie folgt codiert ist: 2 eine Codeblockgruppe oberhalb von der aktuell verarbeiteten Codeblockgruppe wurde codiert; 3 eine Codeblockgruppe rechts von der aktuell verarbeiteten Codeblockgruppe wurde codiert; 4 eine Codeblockgruppe unterhalb von der aktuell verarbeiteten Codeblockgruppe wurde codiert; 5 eine Codeblockgruppe links von der aktuell verarbeiteten Codeblockgruppe wurde codiert; 6 Codeblockgruppen oberhalb und rechts von der aktuell verarbeiteten Codeblockgruppe wurden codiert; 7 Codeblockgruppen unterhalb und rechts von der aktuell verarbeiteten Codeblockgruppe wurden codiert; 8 Codeblockgruppen links und unterhalb von der aktuell verarbeiteten Codeblockgruppe wurden codiert; 9 Codeblockgruppen links und oberhalb von der aktuell verarbeiteten Codeblockgruppe wurden codiert; 10 Codeblockgruppen oberhalb und unterhalb von der aktuell verarbeiteten Codeblockgruppe wurden codiert; 11 Codeblockgruppen links und rechts von der aktuell verarbeiteten Codeblockgruppe wurden codiert; 12 Codeblockgruppen oberhalb, unterhalb und links von der aktuell verarbeiteten Codeblockgruppe wurden codiert; 13 Codeblockgruppen links, rechts und oberhalb von der aktuell verarbeiteten Codeblockgruppe wurden codiert; 14 Codeblockgruppen oberhalb, unterhalb und rechts von der aktuell verarbeiteten Codeblockgruppe wurden codiert; 15 Codeblockgruppen links, rechts und unterhalb von der aktuell verarbeiteten Codeblockgruppe wurden codiert; 16 Codeblockgruppen oberhalb, unterhalb, links und rechts von der aktuell verarbeiteten Codeblockgruppe wurden codiert,
wobei die Bestimmungseinheit (92) ferner zu Folgendem konfiguriert ist:

Bestimmen, gemäß der ersten Verarbeitungsreihenfolge, der relativen Standortbeziehung zwischen der aktuell verarbeiteten Codeblockgruppe und der mindestens einen Codeblockgruppe, die bereits verarbeitet wird und die benachbart zu der aktuell verarbeiteten Codeblockgruppe ist; und
Bestimmen, gemäß der relativen Standortbeziehung und der Entsprechung zwischen den voreingestellten mehreren Kandidatenverarbeitungsreihenfolgen und den mehreren Standortbeziehungen, der Verarbeitungsreihenfolge der mehreren Codeblöcke, die in der aktuell verarbeiteten Codeblockgruppe umfasst sind, wobei Reihenfolge 0 für die relativen Standorte 5, 9, 11, 12 und 16 bestimmt wird, Reihenfolge 1 für die relativen Standorte 4, 8 und 15 bestimmt wird, Reihenfolge 2 für die relativen Standorte 3, 7 und 14 bestimmt wird und Reihenfolge 3 für die relativen Standorte 2, 6, 10 und 13 bestimmt wird.

12. Decodierer nach Anspruch 11, wobei die Erfassungseinheit (91) zu Folgendem konfiguriert ist:

Verwenden der Decodiereinheit (93), um den Bitstrom zu decodieren, um angeordnete Indizes der mehreren Codeblockgruppen zu erlangen; und
Verwenden der Bestimmungseinheit (92), um die erste Verarbeitungsreihenfolge gemäß einer Anordnungsreihenfolge der Indizes der mehreren Codeblockgruppen zu erlangen; oder
Verwenden der Decodiereinheit (91), um den Bitstrom zu decodieren, um angeordnete Koordinaten der mehreren Codeblockgruppen zu erlangen; und
Verwenden der Bestimmungseinheit (92), um die erste Verarbeitungsreihenfolge gemäß einer Anordnungsreihenfolge der Koordinaten der mehreren Codeblockgruppen zu erlangen.

13. Computerprogramm, umfassend Anweisungen, die, wenn das Programm durch einen Computer ausgeführt wird, den Computer dazu veranlassen, das Verfahren nach einem der Ansprüche 1 bis 4 durchzuführen.

14. Computerprogramm, umfassend Anweisungen, die, wenn das Programm durch einen Computer ausgeführt wird, den Computer dazu veranlassen, das Verfahren nach einem der Ansprüche 5 oder 6 durchzuführen.

**Revendications**

1. Procédé de codage, comprenant :

la détermination (101), selon un coût de codage total d'une image cible, d'un premier ordre de traitement de groupes de blocs de code multiples compris dans l'image cible, chaque groupe de blocs de code correspondant à un macrobloc, MB, dans la norme de codage vidéo avancé H.264, H.264/AVC ;
le codage (102) d'un groupe de blocs de code actuellement traité parmi les groupes de blocs de code multiples selon le premier ordre de traitement, pour générer un flux binaire ; et

l'écriture (103) du premier ordre de traitement dans le flux binaire ;
**caractérisé en ce que** l'étape de codage (102) du groupe de blocs de code actuellement traité parmi les groupes de blocs de code multiples selon le premier ordre de traitement, pour générer un flux binaire comprend :

la détermination, selon le premier ordre de traitement, d'un ordre de traitement de blocs de code multiples compris dans le groupe de blocs de code actuellement traité, où chaque bloc de code correspond à un sous-macrobloc, SMB, dans la norme H.264/AVC ; et
le codage du groupe de blocs de code actuellement traité selon le premier ordre de traitement et l'ordre de traitement des blocs de code multiples compris dans le groupe de blocs de code actuellement traité,
comprenant également, avant la détermination (101), selon le premier ordre de traitement, l'ordre de traitement des blocs de code multiples compris dans le groupe de blocs de code actuellement traité :

la détermination des ordres multiples de traitement de candidats des blocs de code en utilisant des ordres multiples de traitement de candidats prédéfinis des blocs de code, de sorte que quatre ordres de traitement de blocs de code sont prédéfinis, les ordres multiples de traitement de candidats prédéfinis des blocs de code sont déterminés selon un mode de division des blocs de code inclus dans le groupe de blocs de code et le mode de division des blocs de code est une division de taille égale de sorte que des tailles des blocs de code dans le groupe de blocs de code sont égales, où un ordre 0 est un balayage progressif de gauche à droite et commençant dans un coin supérieur gauche des blocs de code, un ordre 2 est un balayage progressif de droite à gauche et commençant dans un coin inférieur droit des blocs de code, un ordre 3 est un balayage colonne par colonne de haut en bas et commençant dans un coin supérieur droit des blocs de code, et un ordre 1 est un balayage colonne par colonne de bas en haut et commençant dans un coin inférieur gauche des blocs de code ; et
la détermination d'une correspondance entre les multiples ordres de traitement candidats et les multiples relations d'emplacement, les multiples relations d'emplacement étant de multiples relations d'emplacement relatif entre le groupe de blocs de code actuellement traité et au moins un groupe de blocs de code qui est déjà traité et qui est adjacent au groupe de blocs de code actuellement traité, de sorte qu'il existe 15 emplacements relatifs du groupe de blocs de code actuellement traité et de l'au moins un groupe de blocs de code qui est déjà codé comme suit : 2 un groupe de blocs de code au-dessus du groupe de blocs de code actuellement traité a été codé ; 3 un groupe de blocs de code à droite du groupe de blocs de code actuellement traité a été codé ; 4 un groupe de blocs de code au-dessous du groupe de blocs de code actuellement traité a été codé ; 5 un groupe de blocs de code à gauche du groupe de blocs de code actuellement traité a été codé ; 6 des groupes de blocs de code au-dessus et à droite du groupe de blocs de code actuellement traité ont été codés ; 7 des groupes de blocs de code au-dessous et à droite du groupe de blocs de code actuellement traité ont été codés ; 8 des groupes de blocs de code à gauche et en dessous du groupe de blocs de code actuellement traité ont été codés ; 9 des groupes de blocs de code à gauche et au-dessus du groupe de blocs de code actuellement traité ont été codés ; 10 des groupes de blocs de code au-dessus et au-dessous du groupe de blocs de code actuellement traité ont été codés ; 11 des groupes de blocs de code à gauche et à droite du groupe de blocs de code actuellement traité ont été codés ; 12 des groupes de blocs de code au-dessus, au-dessous et à gauche du groupe de blocs de code actuellement traité ont été codés ; 13 des groupes de blocs de code à gauche, à droite et au-dessus du groupe de blocs de code actuellement traité ont été codés ; 14 des groupes de blocs de code au-dessus, au-dessous et à droite du groupe de blocs de code ont été codés ; 15 des groupes de blocs de code à gauche, à droite et au-dessous du groupe de blocs de code actuellement traité ont été codés ; 16 des groupes de blocs de code au-dessus, au-dessous, à gauche et à droite du groupe de blocs de code actuellement traité ont été codés,
dans lequel la détermination, selon le premier ordre de traitement, de l'ordre de traitement des multiples blocs de code compris dans le groupe de blocs de code actuellement traité comprend :

la détermination, selon le premier ordre de traitement, de la relation d'emplacement relatif entre le groupe de blocs de code actuellement traité et l'au moins un groupe de blocs de code qui est déjà traité et qui est adjacent au groupe de blocs de code actuellement traité ; et
la détermination, selon la relation d'emplacement relatif et de la correspondance entre les ordres multiples de traitement de candidats prédéfinis et les relations d'emplacements multiples, de l'ordre de traitement des blocs de codes multiples compris dans le groupe de blocs de codes actuellement traité,
dans lequel l'ordre 0 est déterminé pour les emplacements relatifs 5, 9, 11, 12 et 16, l'ordre 1 est déterminé pour les emplacements relatifs 4, 8 et 15, l'ordre 2 est déterminé pour les emplacements relatifs 3, 7 et 14 et l'ordre 3 est déterminé pour les emplacements relatifs 2, 6, 10 et 13.

2.  Procédé selon la revendication 1, dans lequel la détermination (101), selon le coût de codage total de l'image cible, du premier ordre de traitement des groupes de blocs de code multiples compris dans l'image cible comprend :

    la détermination d'un coût de codage total correspondant à chaque ordre de traitement de tous les ordres de traitement des groupes de blocs de code multiples, le coût de codage total correspondant à chaque ordre de traitement étant une somme de coûts de codage lorsque les groupes de blocs de code multiples sont codés selon chaque ordre de traitement ; et
    la détermination qu'un ordre de traitement correspondant à un coût de codage total minimum des coûts de codage totaux correspondant à tous les ordres de traitement est le premier ordre de traitement.

3.  Procédé selon la revendication 1, dans lequel l'écriture (103) du premier ordre de traitement dans le flux binaire comprend :

    l'ordonnancement des index du groupe de blocs de code actuellement traités selon le premier ordre de traitement ; et
    le codage des index ordonnés du groupe de blocs de code actuellement traité et l'écriture des index codés dans le flux binaire ; ou
    l'organisation des coordonnées du groupe de blocs de code actuellement traité selon le premier ordre de traitement ; et
    le codage des coordonnées ordonnées du groupe de blocs de code actuellement traité et l'écriture des coordonnées codées dans le flux binaire.

4.  Procédé selon l'une quelconque des revendications 1 à 3, dans lequel un coût de codage du groupe de blocs de code actuellement traité comprend au moins l'un des éléments suivants :

    une quantité de bits consommés pour coder le groupe de blocs de code actuellement traité ; ou
    une distorsion du groupe de blocs de code actuellement traité.

5.  Procédé de décodage, comprenant :

    l'acquisition (201) d'un premier ordre de traitement de groupes de blocs de code multiples d'une image cible à partir d'un flux binaire, chaque groupe de blocs de code correspondant à un macrobloc, MB, dans la norme de codage vidéo avancé H.264, H.264/AVC ;
    **caractérisé par** la détermination (202), selon le premier ordre de traitement, d'un ordre de traitement de blocs de code multiples compris dans un groupe de blocs de code actuellement traité des groupes de bloc de code multiples, où chaque bloc de code correspond à un sous-macrobloc, SMB, dans la norme H.264/AVC ; et
    le décodage (203) du flux binaire selon le premier ordre de traitement et l'ordre de traitement des blocs de code multiples compris dans le groupe de blocs de code actuellement traité,
    le procédé comprend également, avant la détermination (202), selon le premier ordre de traitement, de l'ordre de traitement des blocs de code multiples compris dans le groupe de blocs de code actuellement traité des groupes de blocs de code multiples :

        la détermination des ordres multiples de traitement de candidats des blocs de code en utilisant des ordres multiples de traitement de candidats prédéfinis des blocs de code, de sorte que quatre ordres de traitement de blocs de code sont prédéfinis, les ordres multiples de traitement de candidats prédéfinis des blocs de code sont déterminés selon un mode de division des blocs de code inclus dans le groupe de blocs de code et le mode de division des blocs de code est une division de taille égale de sorte que des tailles des blocs de code dans le groupe de blocs de code sont égales, où un ordre 0 est un balayage progressif de gauche à droite et commençant dans un coin supérieur gauche des blocs de code, un ordre 2 est un balayage progressif de droite à gauche et commençant dans un coin inférieur droit des blocs de code, un ordre 3 est un balayage colonne par colonne de haut en bas et commençant dans un coin supérieur droit des blocs de code, et un ordre 1 est un balayage colonne par colonne de bas en haut et commençant dans un coin inférieur gauche des blocs de code ; et
        la détermination d'une correspondance entre les ordres multiples de traitement de candidats et les relations d'emplacement multiples, les relations d'emplacement multiples étant des relations d'emplacement relatif multiples entre le groupe de blocs de code actuellement traité et au moins un groupe de blocs de code qui est déjà traité et qui est adjacent au groupe de blocs de code actuellement traité, de sorte qu'il existe 15 emplacements relatifs du groupe de blocs de code actuellement traité et de l'au moins un groupe de blocs de code qui est déjà codé comme suit : 2 un groupe de blocs de code au-dessus du groupe de blocs de code actuellement traité a été codé ; 3 un groupe de blocs de code à droite du groupe de blocs de code actuellement traité a été codé ; 4 un groupe de blocs de code au-dessous du groupe de blocs de code actuellement traité a été codé ; 5 un groupe de blocs de code à gauche du groupe de blocs de code actuellement traité a été codé ; 6 des groupes de blocs de code au-dessus et à droite du groupe de blocs de code actuellement traité ont été codés ; 7 des groupes de blocs de code au-dessous et à droite du groupe de blocs de code actuellement traité ont été codés ; 8 des groupes de blocs de code à gauche et au-dessous du groupe de blocs de code actuellement traité ont été codés ; 9 des groupes de blocs de code à gauche et au-dessus du groupe de blocs de code actuellement traité ont été codés ; 10 des groupes de blocs de code au-dessus et au-dessous du groupe de blocs de code actuellement traité ont été codés ; 11 des groupes de blocs de code à gauche et à droite du groupe de blocs de code actuellement traité ont été codés ; 12 des groupes de blocs de code au-dessus, au-dessous et à gauche du groupe de blocs de code actuellement traité ont été codés ; 13 des groupes de blocs de code à gauche, à droite et au-dessus du groupe de blocs de code actuellement traité ont été codés ; 14 des groupes de blocs de code au-dessus, au-dessous et à droite du groupe de blocs de code ont été codés ; 15 des groupes de blocs de code à gauche, à droite et au-dessous du groupe de blocs de code actuellement traité ont été codés ; 16 des groupes de blocs de code au-dessus, au-dessous, à gauche et à droite du groupe de blocs de code actuellement traité ont été codés,

dans lequel la détermination (202), selon le premier ordre de traitement, de l'ordre de traitement des blocs de code multiples compris dans le groupe de blocs de code actuellement traité comprend :

la détermination, selon le premier ordre de traitement, de la relation d'emplacement relatif entre le groupe de blocs de code actuellement traité et l'au moins un groupe de blocs de code qui est déjà traité et qui est adjacent au groupe de blocs de code actuellement traité ; et
la détermination, selon la relation d'emplacement relatif et de la correspondance entre les ordres multiples de traitement de candidats prédéfinis et les relations d'emplacement multiple, de l'ordre de traitement des blocs de code multiples compris dans le groupe de blocs de code actuellement traité, l'ordre 0 étant déterminé pour les emplacements relatifs 5, 9, 11, 12 et 16, l'ordre 1 étant déterminé pour les emplacements relatifs 4, 8 et 15, l'ordre 2 étant déterminé pour les emplacements relatifs 3, 7 et 14 et l'ordre 3 étant déterminé pour les emplacements relatifs 2, 6, 10 et 13.

6. Procédé selon la revendication 5, dans lequel l'acquisition (201) du premier ordre de traitement des groupes de blocs de code multiples de l'image cible à partir du flux binaire comprend :

le décodage du flux binaire pour obtenir des index ordonnés des groupes de blocs de code multiples ; et
la détermination du premier ordre de traitement selon un ordre de disposition des index des groupes de blocs de codes multiples ; ou
le décodage du flux binaire afin d'obtenir des coordonnées ordonnées des groupes de blocs de code multiples ; et
la détermination du premier ordre de traitement selon un ordre de disposition des coordonnées des groupes de blocs de code multiples.

7. Codeur (80), comprenant :

une unité de détermination (81), configurée pour déterminer, selon un coût de codage total d'une image cible, un premier ordre de traitement de groupes de blocs de code multiples compris dans l'image cible, chaque groupe de blocs de code correspondant à un macrobloc, MB, dans la norme de codage vidéo avancé H.264, H.264/AVC ; et
une unité de codage (82), configurée pour coder un groupe de blocs de code actuellement traité parmi les groupes de blocs de code multiples selon le premier ordre de traitement déterminé par l'unité de détermination (81), pour générer un flux binaire, dans lequel
l'unité de codage (82) est également configurée pour écrire le premier ordre de traitement déterminé par l'unité de détermination (81) dans le flux binaire ;
**caractérisé en ce que** l'unité de codage (82) est configurée pour :

déterminer, selon le premier ordre de traitement à l'aide de l'unité de détermination, un ordre de traitement de blocs de code multiples compris dans le groupe de blocs de code actuellement traité, où chaque bloc de code correspond à un sous-macrobloc, SMB, dans la norme H.264/AVC ; et
coder le groupe de blocs de code actuellement traité selon le premier ordre de traitement et l'ordre de traitement des blocs de code multiples compris dans le groupe de blocs de code actuellement traité, l'unité de détermination (81) étant également configurée pour :

déterminer des ordres multiples de traitement de candidats des blocs de code en utilisant des ordres multiples de traitement de candidats prédéfinis des blocs de code, de sorte que quatre ordres de traitement de blocs de code sont prédéfinis, les ordres multiples de traitement de candidats prédéfinis des blocs de code sont déterminés selon un mode de division des blocs de code inclus dans le groupe de blocs de code et le mode de division des blocs de code est une division de taille égale de sorte que des tailles des blocs de code dans le groupe de blocs de code sont égales, où un ordre 0 est un balayage progressif de gauche à droite et commençant dans un coin supérieur gauche des blocs de code, un ordre 2 est un balayage progressif de droite à gauche et commençant dans un coin inférieur droit des blocs de code, un ordre 3 est un balayage colonne par colonne de haut en bas et commençant dans un coin supérieur droit des blocs de code, et un ordre 1 est un balayage colonne par colonne de bas en haut et commençant dans un coin inférieur gauche des blocs de code ; et

déterminer une correspondance entre les ordres multiples de traitement de candidats et les relations d'emplacement multiples, les relations d'emplacement multiples étant des relations d'emplacement relatif multiples entre le groupe de blocs de code actuellement traité et au moins un groupe de blocs de code qui est déjà traité et qui est adjacent au groupe de blocs de code actuellement traité, de sorte qu'il existe 15 emplacements relatifs du groupe de blocs de code actuellement traité et de l'au moins un groupe de blocs de code qui est déjà codé comme suit : 2 un groupe de blocs de code au-dessus du groupe de blocs de code actuellement traité a été codé ; 3 un groupe de blocs de code à droite du groupe de blocs de code actuellement traité a été codé ; 4 un groupe de blocs de code au-dessous du groupe de blocs de code actuellement traité a été codé ; 5 un groupe de blocs de code à gauche du groupe de blocs de code actuellement traité a été codé ; 6 des groupes de blocs de code au-dessus et à droite du groupe de blocs de code actuellement traité ont été codés ; 7 des groupes de blocs de code au-dessous et à droite du groupe de blocs de code actuellement traité ont été codés ; 8 des groupes de blocs de code à gauche et au-dessous du groupe de blocs de code actuellement traité ont été codés ; 9 des groupes de blocs de code à gauche et au-dessus du groupe de blocs de code actuellement traité ont été codés ; 10 des groupes de blocs de code au-dessus et au-dessous du groupe de blocs de code actuellement traité ont été codés ; 11 des groupes de blocs de code à gauche et à droite du groupe de blocs de code actuellement traité ont été codés ; 12 des groupes de blocs de code au-dessus, au-dessous et à gauche du groupe de blocs de code actuellement traité ont été codés ; 13 des groupes de blocs de code à gauche, à droite et au-dessus du groupe de blocs de code actuellement traité ont été codés ; 14 des groupes de blocs de code au-dessus, au-dessous et à droite du groupe de blocs de code ont été codés ; 15 des groupes de blocs de code à gauche, à droite et au-dessous du groupe de blocs de code actuellement traité ont été codés ; 16 des groupes de blocs de code au-dessus, au-dessous, à gauche et à droite du groupe de blocs de code actuellement traité ont été codés,

l'unité de détermination (81) étant également configurée pour : déterminer, selon le premier ordre de traitement, la relation d'emplacement relatif entre le groupe de blocs de code actuellement traité et l'au moins un groupe de blocs de code qui est déjà traité et qui est adjacent au groupe de blocs de code ; et déterminer, selon la relation d'emplacement relatif et la correspondance entre les ordres multiples de traitement de candidats prédéfinis et les relations d'emplacement multiples, l'ordre de traitement des blocs de code multiples compris dans le groupe de blocs de code actuellement traité, l'ordre 0 étant déterminé pour les emplacements relatifs 5, 9, 11, 12 et 16, l'ordre 1 étant déterminé pour les emplacements relatifs 4, 8 et 15, l'ordre 2 étant déterminé pour les emplacements relatifs 3, 7 et 14 et l'ordre 3 étant déterminé pour les emplacements relatifs 2, 6, 10 et 13.

8. Codeur selon la revendication 7, dans lequel l'unité de détermination (81) est configurée pour :

déterminer le coût de codage total correspondant à chaque ordre de traitement de tous les ordres de traitement des groupes de blocs de code multiples, le coût de codage total correspondant à chaque ordre de traitement étant une somme de coûts de codage lorsque les groupes de blocs de code multiples sont codés selon chaque ordre de traitement ; et
déterminer qu'un ordre de traitement correspondant à un coût de codage total minimum des coûts de codage totaux correspondant à tous les ordres de traitement est le premier ordre de traitement.

9. Codeur selon la revendication 7, dans lequel l'unité de codage (82) est configurée pour :

ordonnancer des index du groupe de blocs de code actuellement traité selon le premier ordre de traitement ; et

coder les index ordonnés du groupe de blocs de code actuellement traité et écrire les index codés dans le flux binaire ; ou

ordonner des coordonnées du groupe de blocs de code actuellement traité selon le premier ordre de traitement ; et

coder les coordonnées ordonnées du groupe de blocs de code actuellement traité et écrire les coordonnées codées dans le flux binaire.

10. Codeur selon l'une quelconque des revendications 7 à 9, dans lequel le coût de codage du groupe de blocs de code comprend au moins l'un des éléments suivants :

une quantité de bits consommés par l'unité de codage (82) pour coder le groupe de blocs de code actuellement traité ; ou

une distorsion du groupe de blocs de code actuellement traité.

11. Décodeur (90) comprenant :

une unité d'acquisition (91), configurée pour acquérir un premier ordre de traitement de groupes de blocs de code multiples d'une image cible à partir d'un flux binaire, chaque groupe de blocs de code correspondant à un macrobloc, MB, dans la norme de codage vidéo avancé H.264, H.264/AVC ;

**caractérisé par** une unité de détermination (92), configurée pour déterminer, selon le premier ordre de traitement, un ordre de traitement de blocs de code multiples compris dans un groupe de blocs de code actuellement traité des groupes de bloc de code multiples, où chaque bloc de code correspond à un sous-macrobloc, SMB, dans la norme H.264/AVC ; et

une unité de décodage (93), configurée pour décoder le flux binaire selon le premier ordre de traitement et l'ordre de traitement des blocs de code multiples compris dans le groupe de blocs de code actuellement traité, l'unité de détermination (92) étant également configurée pour :

déterminer des ordres multiples de traitement de candidats des blocs de code en utilisant des ordres multiples de traitement de candidats prédéfinis des blocs de code, de sorte que quatre ordres de traitement de blocs de code sont prédéfinis, les ordres multiples de traitement de candidats prédéfinis des blocs de code sont déterminés selon un mode de division des blocs de code inclus dans le groupe de blocs de code et le mode de division des blocs de code est une division de taille égale de sorte que des tailles des blocs de code dans le groupe de blocs de code sont égales, où un ordre 0 est un balayage progressif de gauche à droite et commençant dans un coin supérieur gauche des blocs de code, un ordre 2 est un balayage progressif de droite à gauche et commençant dans un coin inférieur droit des blocs de code, un ordre 3 est un balayage colonne par colonne de haut en bas et commençant dans un coin supérieur droit des blocs de code, et un ordre 1 est un balayage colonne par colonne de bas en haut et commençant dans un coin inférieur gauche des blocs de code ; et

déterminer une correspondance entre les ordres de traitement candidats multiples et les relations d'emplacement multiples, les relations d'emplacement multiples étant des relations d'emplacement relatif multiples entre le groupe de blocs de code actuellement traité et au moins un groupe de blocs de code qui est déjà traité et qui est adjacent au groupe de blocs de code actuellement traité, de sorte qu'il existe 15 emplacements relatifs du groupe de blocs de code actuellement traité et de l'au moins un groupe de blocs de code qui est déjà codé comme suit : 2 un groupe de blocs de code au-dessus du groupe de blocs de code actuellement traité a été codé ; 3 un groupe de blocs de code à droite du groupe de blocs de code actuellement traité a été codé ; 4 un groupe de blocs de code au-dessous du groupe de blocs de code actuellement traité a été codé ; 5 un groupe de blocs de code à gauche du groupe de blocs de code actuellement traité a été codé ; 6 des groupes de blocs de code au-dessus et à droite du groupe de blocs de code actuellement traité ont été codés ; 7 des groupes de blocs de code au-dessous et à droite du groupe de blocs de code actuellement traité ont été codés ; 8 des groupes de blocs de code à gauche et au-dessous du groupe de blocs de code actuellement traité ont été codés ; 9 des groupes de blocs de code à gauche et au-dessus du groupe de blocs de code actuellement traité ont été codés ; 10 des groupes de blocs de code au-dessus et au-dessous du groupe de blocs de code actuellement traité ont été codés ; 11 des groupes de blocs de code à gauche et à droite du groupe de blocs de code actuellement traité ont été codés ; 12 des groupes de blocs de code au-dessus, au-dessous et à gauche du groupe de blocs de code actuellement traité ont été codés ; 13 des groupes de blocs de code à gauche, à droite et au-dessus du groupe de blocs de code actuellement traité ont été codés ; 14 des groupes de blocs de code au-dessus, au-dessous et à droite du groupe de blocs de code ont été codés ; 15 des groupes de blocs de code à gauche, à droite et au-dessous du groupe de blocs de code actuellement traité ont été codés ; 16 des groupes de blocs de code au-dessus, au-dessous, à gauche et à droite du groupe de blocs de code actuellement traité ont été codés, l'unité de détermination (92) étant également configurée pour :

déterminer, selon le premier ordre de traitement, la relation d'emplacement relatif entre le groupe de blocs de code actuellement traité et l'au moins un groupe de blocs de code qui est déjà traité et qui est adjacent au groupe de blocs de code actuellement traité ; et

déterminer, selon la relation d'emplacement relatif et la correspondance entre les ordres multiples de traitement de candidats prédéfinis et les relations d'emplacement multiples, l'ordre de traitement des blocs de code multiples compris dans le groupe de blocs de code actuellement traité, l'ordre 0 étant déterminé pour les emplacements relatifs 5, 9, 11, 12 et 16, l'ordre 1 étant déterminé pour les emplacements relatifs 4, 8 et 15, l'ordre 2 étant déterminé pour les emplacements relatifs 3, 7 et 14 et l'ordre 3 étant déterminé pour les emplacements relatifs 2, 6, 10 et 13.

12. Décodeur selon la revendication 11, dans lequel l'unité d'acquisition (91) est configurée pour :

utiliser l'unité de décodage (93) pour décoder le flux binaire afin d'obtenir des index ordonnés des groupes de blocs de code multiples ; et

utiliser l'unité de détermination (92) pour déterminer le premier ordre de traitement selon un ordre de disposition des index des groupes de blocs de code multiples ; ou

utiliser l'unité de décodage (91) pour décoder le flux binaire afin d'obtenir des coordonnées ordonnées des groupes de blocs de code multiples ; et

utiliser l'unité de détermination (92) pour déterminer le premier ordre de traitement selon un ordre de disposition des coordonnées des groupes de blocs de code multiples.

13. Programme informatique comprenant des instructions qui, lorsque le programme est exécuté par un ordinateur, amènent l'ordinateur à mettre en œuvre le procédé selon l'une quelconque des revendications 1 à 4.

14. Programme informatique comprenant des instructions qui, lorsque le programme est exécuté par un ordinateur, amènent l'ordinateur à mettre en œuvre le procédé selon la revendication 5 ou 6.

Determine, according to a total coding cost of a target image, a first processing order of multiple code block groups included in the target image — 101

Encode a code block group of the multiple code block groups according to the first processing order, to generate a bitstream — 102

Write the first processing order to the bitstream — 103

FIG. 1

Acquire a first processing order of multiple code block groups of a target image from a bitstream — 201

Determine, according to the first processing order, a processing order of multiple code blocks included in a code block group of the multiple code block groups — 202

Decode the bitstream according to the first processing order and the processing order of the multiple code blocks included in the code block group — 203

FIG. 2

Order 0

Order 1

Order 2

Order 3

FIG. 3

Order 0

Order 1

Order 2

Order 3

FIG. 4

FIG. 5

Transformation
quantized
coefficient 605

Target
image 601

Entropy
encoding 614

Bitstream

Transformation/
quantization 613

Original
value 603

Residual
604

Inter-frame
prediction 611

Dequantization/
inverse
transformation 614

Predictor 602

Reconstruction
residual 606

Intra-frame
prediction 612

Reconstruction
607

FIG. 6

Inter-frame
prediction

Predictor 703

Intra-frame
prediction

Transformation
quantized
coefficient 701

Reconstruction
704

Dequantization/
inverse
transformation 712

Entropy
decoding 711

Bitstream

Reconstruction
residual 702

FIG. 7

Determining unit

81

Encoding unit

82

80

FIG. 8

FIG. 9

FIG. 10

110

Transmit
circuit
114

Processor
111

113

Memory
112

FIG. 11

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20120082392 A1
- EP 2211552 A1
- US 20130064294 A1
- US 2013051475 A1